(19) Europäisches Patentamt
European Patent Office
Office européen des brevets

(11) EP 4 574 859 A1

(12) **EUROPEAN PATENT APPLICATION**
published in accordance with Art. 153(4) EPC

(43) Date of publication:
**25.06.2025 Bulletin 2025/26**

(21) Application number: **23881825.6**

(22) Date of filing: **24.10.2023**

(51) International Patent Classification (IPC):
***C08F 297/06*** *(2006.01)* ***C08F 293/00*** *(2006.01)*
***C08F 236/06*** *(2006.01)* ***C08F 210/02*** *(2006.01)*
***C08F 4/70*** *(2006.01)*

(52) Cooperative Patent Classification (CPC):
**C08F 4/70; C08F 110/02; C08F 210/02; C08F 236/06; C08F 255/02; C08F 293/00; C08F 297/06; C08J 3/24; C08L 51/06**

(86) International application number:
**PCT/CN2023/126161**

(87) International publication number:
**WO 2024/088247 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 CN 202211302115**

(71) Applicants:
- **China Petroleum & Chemical Corporation**
  **Beijing 100728 (CN)**
- **Sinopec (Beijing) Research Institute of Chemical Industry Co., Ltd.**
  **Beijing 100013 (CN)**

(72) Inventors:
- **SUN, Wei**
  **Beijing 100013 (CN)**
- **XU, Lin**
  **Beijing 100013 (CN)**
- **DU, Ying**
  **Beijing 100013 (CN)**
- **ZHAO, Lina**
  **Beijing 100013 (CN)**

(74) Representative: **Hoffmann Eitle**
**Patent- und Rechtsanwälte PartmbB**
**Arabellastraße 30**
**81925 München (DE)**

(54) **COPOLYMER, PREPARATION METHOD THEREFOR, VULCANIZED RUBBER AND USE THEREOF**

(57) The present invention relates to the field of butadiene rubber. Disclosed are a copolymer, a preparation method therefor, vulcanized rubber and a use thereof. The copolymer comprises a polyethylene segment and a butadiene rubber segment. Based on the total weight of the copolymer, the weight ratio of the polyethylene chain segment to the butadiene rubber chain segment is 0.1:99.9-80:20. In the butadiene rubber chain segment, based on the total amount of the butadiene rubber chain segment, the content of cis-1,4-structure is 90-98.5 mol%. The continuous methylene sequence length in the copolymer is at least 165. By means of synthesizing the copolymer by using in-situ polymerization, a polyethylene butadiene rubber block copolymer has a compatibilization effect, the dissolution of a reinforcement polyethylene phase and a butadiene rubber matrix is facilitated, a copolymer with excellent dispersibility of reinforced filler can be obtained without later compounding, and the problems of phase separation, interface failure, etc. existing in blending are solved.

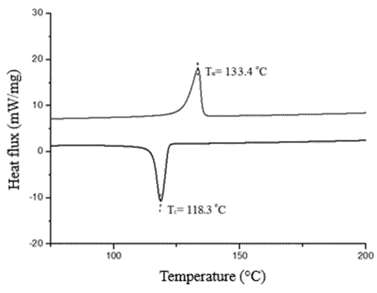


FIG. 1

EP 4 574 859 A1

## Description

### CROSS-REFERENCE TO RELATED APPLICATIONS

The application claims the benefit of the Chinese patent application No. "202211302115.7", filed on October 24, 2022, the content of which is specifically and entirely incorporated herein by reference.

### TECHNICAL FIELD

The present invention relates to the field of copolymers, in particular to a copolymer, a preparation method therefor, a vulcanized rubber and a use thereof.

### BACKGROUND ART

Butadiene rubber is a kind of simple synthetic rubber material using the cheap butadiene monomer as the raw material. Butadiene rubber has a regular and tidy molecular chain without other substituents, it has a large number of free chains and is soft due to the C-C single bonds contained therein, thus the molecules are very soft, its advantages such as unique resilience, excellent abrasion resistance, cold resistance, and dynamic properties, have established the irreplaceable role in the tire, shoemaking, damping and shock-absorbing, sealing, and other industries. However, butadiene rubber has disadvantages such as low tensile strength, tear strength and flexural strength, wet skid resistance, a tendency of cold flow, and poor aging-resistant performance, which limit its use range. Therefore, it is necessary to reinforce and modify the butadiene rubber, to overcome the deficiencies of butadiene rubber per se and expand the use range of the butadiene rubber.

US4340685 discloses cobalt and a carbon disulfide catalyst system for the in-situ synthesis of a blend consisting of cis-l,4-polybutadiene/syndiotactic 1,2-polybutadiene, and the production of VCR rubber. However, the acidic gas generated during the use of carbon disulfide has a serious corrosive effect on the production equipment, and the residual carbon disulfide in the rubber imposes some impacts on the rubber properties.

CN105814132A discloses a process for synthesizing a polybutadiene composite through an in-situ copolymerization of cis-1,4-polybutadiene and syndiotactic 1,2 polybutadiene. However, the problem is that the in-situ copolymerization process requires the use of two catalytic systems during the polymerization, the first step relates to polymerizing 1,3-butadiene in the presence of a lanthanide-based catalyst to form a polymerization mixture including cis-1,4-polybutadiene; the second step relates to polymerizing 1,3-butadiene in the presence of a cobalt-based catalyst and carbon disulfide in the mixture of cis-1,4-polybutadiene to form syndiotactic 1,2-polybutadiene, thereby producing a blend of cis-1,4-polybutadiene and syndiotactic 1,2-polybutadiene.

US9985115B2, US6291591B2, and US6331594B2 disclose a method of using iron, chromium, or molybdenum catalysts and polymerizing butadiene in butadiene rubber-saturated alkanes to synthesize a blend of cis-1,4-polybutadiene and syndiotactic 1,2-polybutadiene.

The above methods relate to the in-situ formation of the blend consisting of syndiotactic 1,2-polybutadiene and butadiene rubber solution. The butadiene rubber solution is used as a dispersant, which has insufficient polymerization activity, such that the polymerization process is uncontrollable, and the composition cannot be easily adjusted. More importantly, the compatibility of syndiotactic 1,2-polybutadiene and butadiene rubber is poor, and the defects of phase separation and interfacial problems easily occur, which affect the material properties.

There is a need to develop new butadiene rubber reinforcement technologies that improve the tensile strength and tear resistance of butadiene rubber products, thereby improving the operational performance and service life of the butadiene rubber products.

### SUMMARY OF THE INVENTION

The present invention aims to improve the defects in the prior art concerning the poor tensile strength and tear resistance of the butadiene rubber materials and provides a copolymer, a preparation method therefor, vulcanized rubber and use thereof. The butadiene rubber material is modified by introducing an ethylene structural segment into the butadiene structural segment of butadiene rubber, thereby forming a block copolymer.

The first aspect of the present invention provides a copolymer, wherein the copolymer is a block copolymer and the copolymer comprises a polyethylene segment and a butadiene rubber segment; based on the total weight of the copolymer, the weight ratio of the polyethylene chain segment to the butadiene rubber chain segment is within a range from 0.1:99.9 to 80:20; in the butadiene rubber chain segment, based on the total amount of the butadiene rubber chain segment, a content of the cis-1,4-structural unit is 90-98.5 mol%; a content of the trans-1,4-structural unit is 0.9-5.7mol%, and a content of the 1,2-structural unit is 0.6-4.3 mol%; the continuous methylene sequence length in the copolymer is at

least 165.

The second aspect of the present invention provides a method for preparing the copolymer comprising:

(1) subjecting ethylene to a polymerization reaction in the presence of an organic solvent, a catalyst, and an aluminum-containing cocatalyst-1 to obtain a polyethylene product; wherein the temperature of the polymerization reaction is within a range of 20-70°C, the ethylene pressure is kept at 1-70bar, and a time of the polymerization reaction is within a range of 1-80min;
(2) feeding 1,3-butadiene monomers into the polyethylene product and removing unreacted ethylene monomers;
(3) adding an aluminum chloride-containing cocatalyst-2 into the polymerization system obtained in step (2) to initiate a copolymerization reaction between the 1,3-butadiene monomers and a polyethylene active chain segment in the polyethylene product to prepare the copolymer;

wherein the catalyst is at least one selected from the group consisting of compounds represented by formula 1, formula 2, and formula 3;

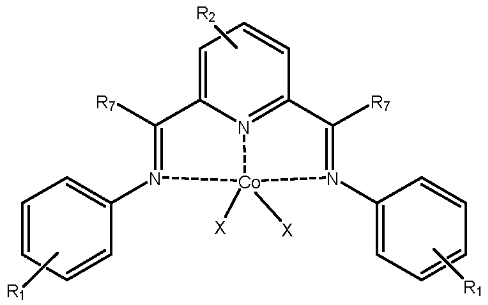
formula 1

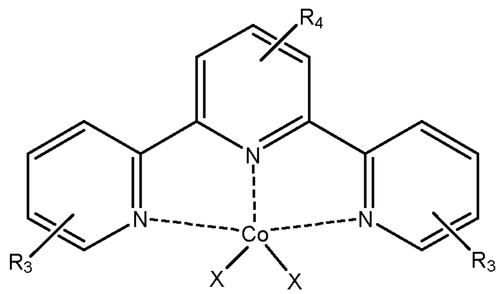
formula 2

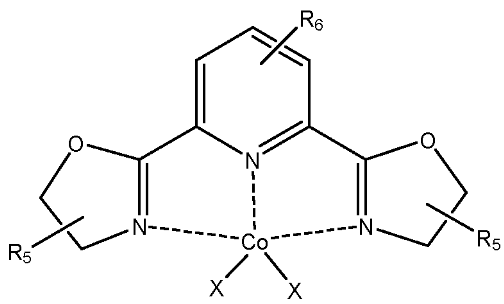
formula 3;

wherein X is chlorine or bromine;
$R_1$ is a substituent which is mono-substituted at the 2- or 4- site of the benzene ring, or the same or different substituents which are di-substituted at the 2-, 4- sites or 2-, 6- sites of the benzene ring, or the same or different substituents which are tri-substituted at the 2-, 4-, 6-sites of the benzene ring, wherein the substituent is -F, $-CH_3$, $-CH_2CH_3$, $-CH(CH_3)_2$, $-C(CH_3)_3$, $-C_6H_5$, or-$CH(C_6H_5)_2$;
$R_3$ is $-CH_3$, $-CH_2CH_3$, $-CH(CH_3)_2$, $-C(CH_3)_3$, $-C_6H_5$, or, $-CH(C_6H_5)_2$ which is mono-substituted at the 6-site of the pyridine ring, or $-CH_3$, $-N(CH_3)_2$, or $-CF_3$ which is mono-substituted at the 4-site on the pyridine ring, or the same or different $-CH_3$, $-CH_2CH_3$, $-C_6H_5$, $-CH(C_6H_5)_2$, $-N(CH_3)_2$, or $-CF_3$ which are di-substituted at the 4- and 6-sites of the pyridine ring;
$R_5$ is $-CH_3$, $-CH_2CH_3$, $-CH(CH_3)_2$, $-C(CH_3)_3$, $-C_6H_5$, or $-CH(C_6H_5)_2$ which is mono-substituted at the 4-site of the

dihydro oxazole ring;

$R_2$, $R_4$, and $R_6$ are each independently H, or -Cl, -F, $-CH_3$, $-OCH_3$, $-N(CH_3)_2$, or $-CF_3$ which are mono-substituted at the 4-site of the pyridine ring;

$R_7$ is H, $-CH_3$, $-CH_2CH_3$, $-CH(CH_3)_2$, $-C(CH_3)_3$, -Cl, $-C_6H_5$, or $-CH(C_6H_5)_2$.

The third aspect of the present invention provides a copolymer produced with the method of the present invention.

The fourth aspect of the present invention provides a vulcanized rubber produced with the copolymer of the present invention.

The fifth aspect of the present invention provides a use of the vulcanized rubber of the present invention in a tire, a shoe sole, a conveyor belt, a hose, or a sealing gasket.

Due to the aforementioned technical scheme, the present invention has the following advantageous over the prior art:

The present invention obtains a copolymer synthesized by in-situ polymerization, the copolymer is a block copolymer comprising a polyethylene segment and a butadiene rubber segment, and the copolymer has a high continuous methylene sequence length, wherein a polyethylene butadiene rubber block copolymer has a compatibilization effect, the dissolution of a reinforcement polyethylene phase and a butadiene rubber matrix is facilitated, a copolymer with excellent dispersibility of reinforced filler can be obtained without later compounding, and the problems such as phase separation and interface failure existing in blending are solved; in addition, the regular and ordered arrangement of the high continuous methylene sequence length causes that crystalline regions form in the copolymer segment, resulting in the reinforcing effect on the butadiene rubber.

The present invention uses a catalyst and a single-step polymerization process, in particular, a catalyst having a specific structure is selected, such that the conventional polymers of polyethylene (resin) and butadiene rubber can be synthesized simultaneously, and the continuous methylene sequence length in the produced copolymer can be significantly increased over the prior art, the single-step polymerization process has advantages over the step-by-step polymerization process, such as a simple process, strong operability, low costs, easily adjustable polymerization process and composite composition, and can facilitate the industrial production.

Other characteristics and advantages of the present invention will be described in detail in the following DESCRIPTION OF THE PREFERRED EMBODIMENT.

## BRIEF DESCRIPTION OF THE DRAWINGS

FIG. 1 illustrates a Differential Scanning Calorimetry (DSC) graph (the part above normal temperature) of the copolymer prepared in Example 1;

FIG. 2 shows an infrared spectrogram of the copolymer prepared in Example 1;

FIG. 3 illustrates a DSC graph (the part above normal temperature) of the copolymer prepared in Example 11;

FIG. 4 shows an infrared spectrogram of the copolymer prepared in Example 11;

FIG. 5 illustrates the nuclear magnetic hydrogen spectrum of the copolymer prepared in Example 6;

FIG. 6 shows the Transmission Electron Microscopy (TEM) images of the copolymers prepared in Comparative Example 6 (left image) and Example 6 (right image);

FIG. 7 shows a COSY spectrum of the copolymer prepared in Example 3.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a copolymer, wherein the copolymer is a block copolymer and the copolymer comprises a polyethylene segment and a butadiene rubber segment; based on the total weight of the copolymer, the weight ratio of the polyethylene chain segment to the butadiene rubber chain segment is within the range from 0.1:99.9 to 80:20; in the butadiene rubber chain segment, based on the total amount of the butadiene rubber chain segment, the content of the cis-1,4-structural unit is 90-98.5 mol%; the content of the trans-1,4-structural unit is 0.9-5.7mol%, and the content of the 1,2-structural unit is 0.6-4.3 mol%; the continuous methylene sequence length in the copolymer is at least 165.

The copolymer provided by the present invention may introduce the polyethylene segment consisting of the ethylene structural units, in addition to the cis-1,4-butadiene structural units (the structural units can form butadiene rubber segment) contained in the butadiene rubber (i.e., cis-1,4-polybutadiene rubber), thereby forming a block copolymerization structure consisting of cis-1,4-butadiene structural unit segment and ethylene structural unit segment, modifying the butadiene rubber segment, improving the existing defects of poor tensile strength and tear resistance of the butadiene rubber material. In particular, the copolymer in the present invention has a continuous methylene sequence length of at least 165, which can desirably promote compatibility of the polyethylene segment and the butadiene rubber segment, such that the resin phase and the rubber phase can be uniformly mixed, the reinforcement effect of the resin phase on the rubber phase can be desirably implemented.

Further, when the weight ratio of the polyethylene segment and the butadiene rubber segment in the copolymer and the contents of the cis-1,4-structure, the trans-1,4-structure and the 1,2-structure in the butadiene rubber segment fall into the aforementioned ranges, both the elasticity of the rubber phase and the reinforcement of the resin phase can be desirably balanced, which is more favorable to satisfying the practical use requirements of the copolymer.

In some preferred embodiments of the present invention, the weight ratio of the polyethylene chain segment to the butadiene rubber chain segment is within the range from 1:99 to 75: 25, based on the total weight of the copolymer.

In some preferred embodiments of the present invention, the continuous methylene sequence length in the copolymer is within the range of 250-1,800.

The copolymer provided by the present invention contains a butadiene rubber segment, which may have a structure obtained from the 1-site and 4-site addition polymerization, or a structure obtained from the 1-site and 2-site addition polymerization, thereby providing the copolymer with ultimately improved properties. In some preferred embodiments, the content of cis-1,4-structure in the butadiene rubber chain segment is within the range of 92-98 mol%, based on the total amount of the butadiene rubber chain segment.

In some preferred embodiments of the present invention, the content of trans-1,4-structural unit in the butadiene rubber chain segment is within the range of 1.2-4.8 mol%, based on the total amount of the butadiene rubber chain segment.

In some preferred embodiments of the present invention, the content of the 1,2-structural unit in the butadiene rubber chain segment is within the range of 0.8-3.2 mol%, based on the total amount of the butadiene rubber chain segment.

The copolymer provided by the present invention has the aforementioned structure. In some preferred embodiments, the copolymer has a melting temperature Tm within the range of 120-150°C and a crystallinity within the range of 0.2-80%; preferably, the Tm is within the range of 125-145°C, and the crystallinity is within the range of 0.5-65%. The above properties of the copolymer can be measured through the DSC method.

The present invention provides a copolymer, the copolymer preferably has a glass transition temperature Tg from -120°C to -95°C, more preferably from -115°C to -100°C.

The present invention provides a copolymer, the copolymer preferably a crystallization temperature Tc within the range of 100-125°C, more preferably within the range of 105-122°C.

The present invention provides a copolymer, the copolymer preferably has a number average molecular weight within the range of 50,000-800,000 g/mol and a molecular weight distribution within the range of 2-7; more preferably, the copolymer has a number average molecular weight within the range of 100,000-700,000 g/mol and a molecular weight distribution within the range of 2.5-6.5. The aforementioned properties of the copolymer can be measured by the Gel Permeation Chromatography (GPC) method.

In the second aspect, the present invention provides a method for preparing the copolymer comprising:

(1) subjecting ethylene to a polymerization reaction in the presence of an organic solvent, a catalyst, and an aluminum-containing cocatalyst-1 to obtain a polyethylene product; wherein the temperature of the polymerization reaction is within the range of 20-70°C, the ethylene pressure is kept at 1-70bar, and the time of the polymerization reaction is within the range of 1-80min;
(2) feeding 1,3-butadiene monomers into the polyethylene product and removing unreacted ethylene monomers;
(3) adding an aluminum chloride-containing cocatalyst-2 into the polymerization system obtained in step (2) to initiate a copolymerization reaction between the 1,3-butadiene monomers and a polyethylene active chain segment in the polyethylene product to prepare the copolymer;

wherein the catalyst is at least one selected from the group consisting of compounds represented by formula 1, formula 2, and formula 3;

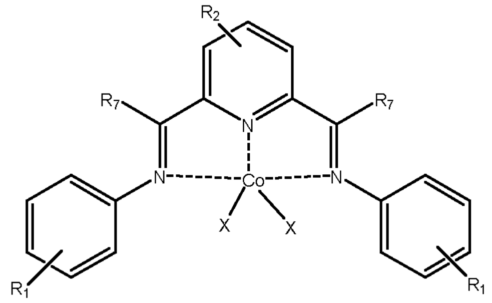

formula 1

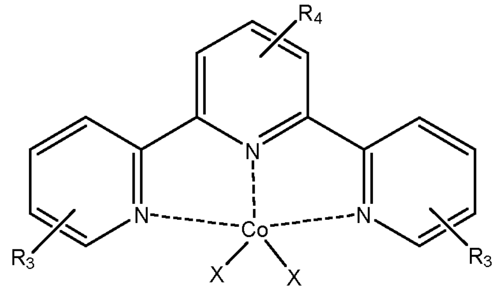

formula 2

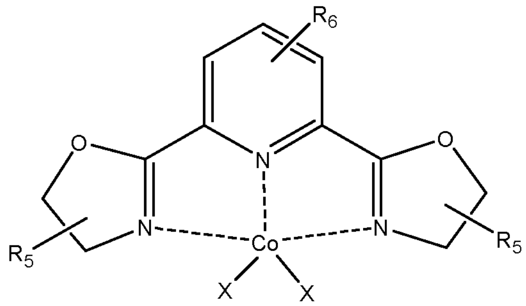

formula 3;

wherein X is chlorine or bromine;

$R_1$ is a substituent which is mono-substituted at the 2- or 4- site of the benzene ring, or the same or different substituents which are di-substituted at the 2-, 4- sites or 2-, 6- sites of the benzene ring, or the same or different substituents which are tri-substituted at the 2-, 4-, 6-sites of the benzene ring, wherein the substituent is -F, $-CH_3$, $-CH_2CH_3$, $-CH(CH_3)_2$, $-C(CH_3)_3$, $-C_6H_5$, or$-CH(C_6H_5)_2$;

$R_3$ is $-CH_3$, $-CH_2CH_3$, $-CH(CH_3)_2$, $-C(CH_3)_3$, $-C_6H_5$, or, $-CH(C_6H_5)_2$ which is mono-substituted at the 6-site of the pyridine ring, or $-CH_3$, $-N(CH_3)_2$, or $-CF_3$ which is mono-substituted at the 4-site on the pyridine ring, or the same or different $-CH_3$, $-CH_2CH_3$, $-C_6H_5$, $-CH(C_6H_5)_2$, $-N(CH_3)_2$, or $-CF_3$ which are di-substituted at the 4- and 6-sites of the pyridine ring;

$R_5$ is $-CH_3$, $-CH_2CH_3$, $-CH(CH_3)_2$, $-C(CH_3)_3$, $-C_6H_5$, or $-CH(C_6H_5)_2$ which is mono-substituted at the 4-site of the dihydro oxazole ring;

$R_2$, $R_4$, and $R_6$ are each independently H, or -Cl, -F, $-CH_3$, $-OCH_3$, $-N(CH_3)_2$, or $-CF_3$ which are mono-substituted at the 4-site of the pyridine ring;

$R_7$ is H, $-CH_3$, $-CH_2CH_3$, $-CH(CH_3)_2$, $-C(CH_3)_3$, -Cl, $-C_6H_5$, or $-CH(C_6H_5)_2$.

In the present invention, in the presence of a catalyst system comprising a cobalt-based catalyst containing a cobalt organic compound, the ethylene polymerization reaction and the copolymerization reaction of polyethylene and 1,3-butadiene monomer are sequentially carried out, so that the polyethylene segment and the polybutadiene segment in the obtained product high polymer are chemically bonded together to prepare a block copolymer comprising polyethylene segment and butadiene rubber segment, and the properties of the butadiene rubber are improved.

Specifically, the catalyst with the specific structure is selected, and the conditions of the ethylene polymerization reaction are controlled in the present invention, so that the two traditional polymers (i.e., polyethylene and butadiene rubber) can be synthesized simultaneously, and the continuous methylene sequence length in the prepared copolymer can be remarkably increased compared with the prior art, and the properties of the butadiene rubber are further improved.

Furthermore, during the copolymerization reaction stage of polyethylene and 1,3-butadiene, an aluminum

chloride-containing cocatalyst-2 is added, wherein the aluminum chloride-containing cocatalyst-2 has a certain electron-donating effect, and is favorable for forming a 1,3-butadiene η3 coordination environment, and facilitates the 1,4-polymerization of 1, 3-butadiene.

In some embodiments of the present invention, $R_1$ denotes a substituent on the benzene ring represented by formula 1, $R_1$ represents a substituent other than H at the partially substituted sites on the benzene ring, as previously mentioned, $R_1$ denotes a substituent which is mono-substituted at the 2- or 4- site of the benzene ring, or the substituents which are di-substituted at the 2-, 4- sites or 2-, 6- sites of the benzene ring, or the substituents which are tri-substituted at the 2-, 4-, 6-sites of the benzene ring, and the groups on the other substituted positions are H atoms; when the substituents are di-substituted and tri-substituted, the substituents may be the same or different; preferably, the substituent which is mono-substituted at the 2- or 4- site of the benzene ring may be -F, $-CH_3$, $-CH_2CH_3$, $-CH(CH_3)_2$, $-C(CH_3)_3$, $-C_6H_5$, or-$CH(C_6H_5)_2$; or the substituents which are di-substituted at the 2-, 4- sites or 2-, 6- sites of the benzene ring may be -F, $-CH_3$, $-CH_2CH_3$, $-CH(CH_3)_2$, $-C(CH_3)_3$, $-C_6H_5$, or-$CH(C_6H_5)_2$, or the substituents which are tri-substituted at the 2-, 4-, 6-sites of the benzene ring may be -F, $-CH_3$, $-CH_2CH_3$, $-CH(CH_3)_2$, $-C(CH_3)_3$, $-C_6H_5$, or-$CH(C_6H_5)_2$; more specifically, the substituents on the substituted sites of the benzene ring are one of the following groups: 2-F-, 2-$CH_3$-, 4-F-, 4-$CH_3$-, 2,4-F-, 2,4-$CH_3$-, 2,6-F-, 2,6-$CH_3$-, 2,4,6-F-, 2,4,6-$CH_3$-, 2-$CH_2CH_3$-, 4-$CH_2CH_3$-, 2,4-$CH_2CH_3$-, 2-$CH_2CH_3$-4-$CH_3$-, 2,6-$CH_2CH_3$-, 2-$CH_2CH_3$-6-$CH_3$-, 2,4,6-$CH_2CH_3$-, 2-$CH(CH_3)_2$-, 4-$CH(CH_3)_2$-, 2,4-$CH(CH_3)_2$-, 2,6-$CH(CH_3)_2$-, 2,4,6-$CH(CH_3)_2$-, 2-$C(CH_3)_3$-, 4-$C(CH_3)_3$-, 2,4-$C(CH_3)_3$-, 2,6-$C(CH_3)_3$-, 2-$C(CH_3)_3$-6-$CH_3$-, 2,4,6-$C(CH_3)_3$-, 2-$C_6H_5$-, 4-$C_6H_5$-, 2,4-$C_6H_5$-, 2,6-$C_6H_5$-, 2,4,6-$C_6H_5$-, 2-$CH(C_6H_5)_2$-, 4-$CH(C_6H_5)_2$-, 2,4-$CH(C_6H_5)_2$-, 2,6-$CH(C_6H_5)_2$-, and 2,4,6-$CH(C_6H_5)_2$-.

In some embodiments of the present invention, $R_3$ denotes a substituent on the pyridine ring (other than the pyridine ring substituted by $R_4$) represented by formula 2, $R_3$ represents a substituent other than H at a portion of the substitution sites on the pyridine ring, as previously mentioned, $R_3$ denotes a substituent which is mono-substituted at the 4- or 6- site of the pyridine ring, or the substituents which are di-substituted at the 4-, 6- sites of the pyridine ring, and the groups on the other substituted positions are H atoms; when the substituents are di-substituted, the substituents may be the same or different; preferably, the substituent which is mono-substituted at the 6-site of the pyridine ring may be $-CH_3$, $-CH_2CH_3$, $-CH(CH_3)_2$, $-C(CH_3)_3$, $-C_6H_5$ or-$CH(C_6H_5)_2$, or the substituent which is mono-substituted at the 4-site of the pyridine ring may be $-CH_3$, $-N(CH_3)_2$, or $-CF_3$, or the substituents which are di-substituted at the 4-, 6- sites of the pyridine ring may be $-CH_3$, $-CH_2CH_3$, $-C_6H_5$, $-CH(C_6H_6)_2$, $-N(CH_3)_2$, or-$CF_3$, more specifically, the substituents on the substituted sites of the pyridine ring are one of the following groups: 6-$CH_3$-, 6-$CH_2CH_3$-, 6-$C_6H_5$-, 6-$CH(C_6H_5)_2$-, 4-$CH_3$-, 4-$N(CH_3)_2$-, 4-$CF_3$-, 4,6-$CH_3$-, 4-$CH_3$-6-$CH_2CH_3$-, 4-$CH_3$-6-$C_6H_5$-, 4-$CH_3$-6-$CH(C_6H_5)_2$-, 4-$N(CH_3)_2$-6-$CH_3$-, 4-$N(CH_3)_2$-6-$CH_2CH_3$-, 4-$N(CH_3)_2$-6-$C_6H_5$-, 4-$N(CH_3)_2$-6-$CH(C_6H_5)_2$-, 4-$CF_3$-6-$CH_3$-, 4-$CF_3$-6-$CH_2CH_3$-, 4-$CF_3$-6-$C_6H_5$-, and 4-$CF_3$-6-$CH(C_6H_5)_2$-.

In some embodiments of the present invention, $R_5$ denotes a substituent on the dihydro oxazole ring represented by formula 3, $R_5$ represents a substituent other than H at a portion of substitution sites on the dihydro oxazole ring, as previously mentioned, $R_5$ denotes a substituent which is mono-substituted at the 4-site of the dihydro oxazole ring, and the groups on the other substituted positions are H atoms; preferably, the substituent which is mono-substituted at the 4-site of the pyridine ring may be $-CH_3$, $-CH_2CH_3$, $-CH(CH_3)_2$, $-C(CH_3)_3$, $-C_6H_5$, or $-CH(C_6H_5)_2$; more particularly, the substituents on the substitution sites of the pyridine ring are one of the following groups: 4-$CH_3$-, 4-$CH_2CH_3$-, 4-$CH(CH_3)_2$-, 4-$C(CH_3)_3$-, 4-$C_6H_5$-, 4-$CH(C_6H_5)_2$-.

In some embodiments of the present invention, $R_2$, $R_4$, and $R_6$ denote the substituents on the pyridine ring represented by formula 1, formula 2, and formula 3, respectively (different from the pyridine ring substituted with $R_3$ in formula 2), allowing each of the substitution sites on the pyridine ring substituted with $R_2$, $R_4$, and $R_6$ respectively to be H atom, preferably, $R_2$, $R_4$, and $R_6$ are each independently H, or $R_2$, $R_4$, and $R_6$ denote -Cl, -F, $-CH_3$, $-OCH_3$, $-N(CH_3)_2$, or $-CF_3$ which are mono-substituted at the 4-site of the pyridine ring; more preferably, the substituents on the substituted sites of the pyridine ring are one of the following groups: 4-Cl-, 4-F-, 4-$CH_3$-, 4-$OCH_3$-, 4-$N(CH_3)_2$-, and 4-$CF_3$-. $R_2$, $R_4$, and $R_6$ may be the same or different.

In some embodiments of the present invention, $R_7$ denotes a substituent represented by formula 1. Preferably, $R_7$ is H, $-CH_3$, $-CH_2CH_3$, -Cl or $-C_6H_5$.

In some embodiments of the present invention, preferably, the aluminium-containing cocatalyst-1 is at least one selected from the group consisting of methylaluminoxane(MAO), triisobutylaluminium-modified methylaluminoxane (MMAO) , diethylaluminium chloride, ethylaluminium sesquichloride, di-n-propylaluminium chloride, diisopropylaluminium chloride, di-n-butylaluminium chloride, diisobutylaluminium chloride, di-n-octylaluminium chloride, ethylaluminium dichloride, n-propylaluminium dichloride, isopropylaluminium dichloride, n-butylaluminium dichloride, isobutylaluminium dichloride, and n-octylaluminium dichloride, preferably at least one selected from the group consisting of methylaluminoxane, triisobutylaluminium-modified methylaluminoxane, diethylaluminium chloride, di-tert-butylaluminium chloride, ethylaluminium dichloride, and ethylaluminium sesquichloride, to initiate the polymerization reaction of the ethylene monomer.

In some embodiments of the present invention, preferably, the aluminum chloride-containing cocatalyst-2 is at

least one selected from the group consisting of diethylaluminium chloride, ethylaluminium sesquichloride, di-n-propylaluminium chloride, diisopropylaluminium chloride, di-n-butylaluminium chloride, diisobutylaluminium chloride, di-n-octylaluminium chloride, ethylaluminium dichloride, n-propylaluminium dichloride, isopropylaluminium dichloride, n-butylaluminium dichloride, isobutylaluminium dichloride, and n-octylaluminium dichloride, preferably at least one selected from the group consisting of diisobutylaluminium chloride, ethylaluminium dichloride, and ethylaluminium sesquichloride, to initiate the copolymerization reaction of the 1,3-butadiene monomer and the polyethylene.

In some embodiments of the present invention, the molar ratio of the catalyst: the aluminum-containing cocatalyst-1: the aluminum chloride-containing cocatalyst-2 is preferably 1: (15-1,000): (20-1,000), more preferably 1: (20-900): (40-900). In the present invention, by controlling the molar ratio of the catalyst, the aluminum-containing cocatalyst-1 and the aluminum chloride-containing cocatalyst-2 to satisfy the above ranges, it is possible to control the reactivities of the polymerization reaction and the copolymerization reaction in steps (1) and (3) respectively, and control the contents of the ethylene structure segment and the butadiene structure segment and the content of cis-1,4-structure in the prepared copolymer, and control the continuous methylene sequence length in the copolymer.

According to some embodiments of the present invention, preferably, the organic solvent is at least one selected from the group consisting of n-pentane, neopentane, n-hexane, cyclohexane, n-heptane, n-octane, isooctane, benzene, toluene, decalin, dodecane, and hydrogenated gasoline, more preferably toluene.

In some embodiments of the present invention, it is preferable in step (1) that the temperature of the polymerization reaction is within the range of 30-60°C, the ethylene pressure is kept at 2.5-50bar, and the time of the polymerization reaction is within the range of 2-60 min. The pressure may be the gas phase pressure of the feedstock ethylene monomer.

According to some embodiments of the present invention, it is preferable that in step (3), the concentration of 1,3-butadiene in the polymerization system obtained in step (2) is within the range of 0.4-12 mol/L, more preferably within the range of 0.6-9 mol/L; the temperature of the copolymerization reaction is within the range of 30-70°C, more preferably within the range of 40-60°C; the pressure of the copolymerization reaction is within the range of 1-10bar, more preferably within the range of 2-5 bar; the time of the copolymerization reaction is within the range of 0.5-5 hours, more preferably within the range of 1-4 hours. The pressure may be the gas phase pressure of the feedstock 1,3-butadiene monomer. The concentration of 1,3-butadiene is defined to limit the used amount of solvent.

In some embodiments of the present invention, the molar ratio of the catalyst to the 1,3-butadiene in step (3) is preferably 1: (1,000-10,000); more preferably 1: (1,200-8,000).

In some embodiments of the present invention, the used amount relationship of the ethylene monomer and the butadiene may be controlled by adjusting the time and pressure of the ethylene monomer introduced into the reaction, thereby obtaining the composite material including a butadiene rubber as the elastomer substrate and a polyethylene as the reinforcing phase. Preferably, the feed weight relationship of the ethylene monomer and the butadiene monomer satisfies the amounts of the corresponding polyethylene segment and butadiene rubber segment in the obtained copolymer, for example, based on the total weight of the copolymer, the weight ratio of the polyethylene chain segment to the butadiene rubber chain segment is within the range from 0.1:99.9 to 80: 20, more preferably within the range from 1:99 to 75: 25; the content of cis-1,4-structure in the butadiene rubber segment is within the range of 90-98.5mol%, preferably within the range of 92-98mol%, based on the total amount of the butadiene rubber segment; the continuous methylene sequence length in the copolymer is at least 165, preferably within the range of 250-1,800.

In the present invention, when the copolymerization reaction needs to be terminated, the following steps may be further performed:

when the copolymerization reaction proceeded to a proper time, adding a stabilizer and a terminating agent sequentially to terminate the copolymerization reaction, washing and dissolving the obtained product, and drying the product in vacuum to obtain the ethylene-enhanced butadiene rubber.

Wherein the stabilizer may be a reagent with the function of antioxidation, it may be a toluene solution of 2,2-methylene-bis-(4-methyl-6-tert-butylphenol) with the mass concentration of 5%, and the addition amount of the stabilizer may be 0.5wt%-1wt% of the total weight of the monomer. The terminating agent may be a reagent for terminating the polymerization process and removing the residual catalyst, it may be a hydrochloric acid methanol solution with a hydrochloric acid mass concentration of 4%, and the addition amount of the terminating agent may be 0.1wt%-1wt% of the total weight of the monomer. The washing process may be washing with methanol solution and water about 3 times in sequence.

The method provided by the present invention can specifically comprising:

purifying the polymerization reaction environment by using a double-row pipe operation technology in reaction equipment; adding the cobalt catalyst provided by the present invention and an organic solvent into the reaction equipment, stirring and dispersing uniformly, and heating to a set temperature; then introducing an ethylene monomer having a pressure of 1-70 bar into the reaction equipment, maintaining the constant pressure, then adding a set amount of aluminum-containing cocatalyst-1 to initiate the polymerization reaction of ethylene, and determining the

polymerization reaction time according to the different content of the ethylene chain segments in the finally obtained copolymer;

stopping introducing the ethylene monomer after the set polymerization reaction time is reached, feeding the purified 1,3-butadiene monomer instead, removing the residual ethylene monomer, and maintaining the pressure to 1-10 bar;

adding an aluminum chloride-containing cocatalyst-2 to initiate a copolymerization reaction between the 1,3-butadiene monomer and a polyethylene active chain segment, and keeping constant pressure for a set time;

finally, adding a stabilizer and a terminating agent to terminate the reaction; then washing and dissolving the obtained product with a methanol solution and an organic solvent 3 times in sequence, subsequently drying the product in vacuum to prepare the polyethylene in-situ reinforced cis-polybutadiene rubber.

The third aspect of the present invention provides a copolymer produced with the method of the present invention.

In some embodiments of the present invention, the copolymer is preferable as previously mentioned, and the content will not be repeatedly described herein.

The fourth aspect of the present invention provides a vulcanized rubber produced with the copolymer of the present invention.

The fifth aspect of the present invention provides a use of the vulcanized rubber of the present invention in a tire, a shoe sole, a conveyor belt, a hose, or a sealing gasket.

To clearly describe the reaction process of the present invention, the process for preparing a copolymer will be described in detail with reference to examples, but the following examples do not limit the protection scopes of the present invention.

In the following examples and comparative examples, the DSC data was measured by using a PerkinElmer DSC8000 type differential thermal analyzer under the following test conditions including about 5-10 mg of sample was accurately weighed, the nitrogen atmosphere was maintained during the whole process, the polymer was first heated to 200-220°C at a temperature rise rate of 10°C/min, the constant temperature state was kept for 2min to eliminate the thermal history, the temperature was then lowered to 50°C at a cooling rate of 10°C/min, the temperature was finally raised to 210°C again at the same temperature rise rate;

successive self-nucleating and annealing thermal treatment (SNA) on the copolymer samples was implemented according to the procedure in the literature "Quantitative Determination of Short-Chain Branching Content and Distribution in polymeric polyesters by thermal Fractionated hybridization ranking calibration" (Polymer Engineering & Science, 2003, No. 43, pp. 1878-1888) published by the authors M. Zhang and S. E. Wanke, such that the different continuous methylene sequence lengths (MSL) were classified. A set of segments with similar continuous methylene sequence lengths caused the crystals of similar size, which were melted at a similar temperature (F. M. Mirabella, J. Polyrn Sci: Part B: Polym Phys., 2001, No. 39, page 2800). The melting endothermic peaks of the polymer were then measured with the Differential Scanning Calorimetry (DSC) according to the China National Standard GB/T29611-201, each endothermic peak was corresponding to continuous methylene sequence length. The continuous methylene sequence length of the copolymer was calculated according to formula (I).

$$MSL = \frac{2}{e^{\left(\frac{142.2}{T} - 0.3451\right)} - 1} \qquad (I)$$

GPC data was measured using a PL triple detector instrument under the following test conditions: the sample was dissolved in trichlorobenzene (1 mg/mL) at 150°C, polystyrene was used as a standard sample.

The breaking strength of the vulcanized rubber was tested according to the provisions of the China National Standard GB/T528-2009, and the model of the tensile machine was AG-20KNG manufactured by Shimadzu Corporation; the tearing strength was tested according to the provision of the China National Standard GB/T529-2008, and the model of the tensile machine was AG-20KNG manufactured by Shimadzu Corporation.

The infrared spectrum test was implemented by using the Attenuated Total Reflectance-Fourier Transform Infrared Spectroscopy (ATR-FTIR) method, and was measured with the Nicolet 6700 type infrared spectrometer.

The Nuclear Magnetic Resonance (NMR) spectrogram was obtained by using the Unity-400 nuclear magnetic resonance spectrometer manufactured by Varian Corporation in the United States of America (USA), the solvent was deuterated chloroform or deuterated tetrachloroethane, the $^{1}H$ NMR (400 MHz), $^{13}C$ NMR (100 MHz) and COSY were recorded at normal temperature, the TMS was an internal standard.

TEM was tested using the Tecnai G2 F20 S-TWIN transmission electron microscope after being processed with an OsO4 staining slice.

Example 1

(1) The polymerization reaction equipment was circulated by using a double-row pipe operation technology three times, 2L of toluene, ethylene, and a catalyst represented by formula 1 were added (wherein $R_1$ was 2,6-$CH(CH_3)_2$- (the substituents at other substitution sites of a benzene ring were H atoms), $R_2$ was H (all substituents at substitution sites of a pyridine ring were H atoms), $R_7$ was methyl, and X was chlorine) (2.260 mmol), the materials were rapidly stirred with a mechanical stirrer to uniformly disperse a mixed system; the uniformly dispersed mixed system was heated to 30°C, the ethylene monomer was maintained at a constant pressure (4 bar) atmosphere, methylaluminoxane (MAO) (0.679 mol) was then added to initiate polymerization of ethylene, after polymerization was performed for 5min, the introducing of ethylene monomer was stopped;

the 1,3-butadiene monomer was introduced into the polymerization equipment to purge unpolymerized ethylene monomer, 5.56mol of 1,3-butadiene was added after the ethylene monomer was removed completely, and the atmosphere of constant pressure (3 bar) was kept, diisobutylaluminum chloride (0.679 mol) was injected to initiate the copolymerization reaction of butadiene, the copolymerization reaction temperature was 45°C, and the copolymerization time was 2h; a toluene solution of 2,2-methylene-bis-(4-methyl-6-tert-butylphenol) with a mass concentration of 5% was subsequently added as a stabilizer, 20mL of a hydrochloride methanol solution having the mass concentration 4% of hydrochloric acid was added to the polymerization system to terminate the reaction, and finally, the polymerization product was washed with methanol for 3 times and dried in vacuum to obtain 255.9g of copolymer. Wherein the molar ratio of the catalyst: aluminum-containing cocatalyst-1: the aluminum chloride-containing cocatalyst-2 was 1: 300: 300. The molar ratio of the catalyst: 1, 3-butadiene was 1: 2,460.

(2) The resulting copolymers were characterized: FT-IR (KBr, $cm^{-1}$) (a spectrogram was obtained, the characteristic peaks of butadiene rubber with wave numbers of 1,650 $cm^{-1}$ and 736 $cm^{-1}$ and a polyethylene segment with a wave number of 720 $cm^{-1}$ as shown in FIG. 2); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 3.5 wt%, and the butadiene rubber segment content was 96.5 wt%; in the butadiene rubber segment, the content of cis-1,4-structure was 97.7 mol%, the content of trans-1,4-structure was 1.4 mol%, and the content of 1,2-structure was 0.9 mol%;

according to the DSC test data as shown in FIG. 1, for the copolymer, Tg = -109.9°C, Tm = 133.4°C, Tc = 118.3°C, and crystallinity of the copolymer was 2.5%; the continuous methylene sequence length was within the range of 261-412; according to the GPC test data, the number average molecular weight of the copolymer was 174,000 g/mol, and the molecular weight distribution was 2.93. The structure and physicochemical parameters of the copolymer were shown in Table 2.

Example 2

(1) The polymerization reaction equipment was circulated by using a double-row pipe operation technology three times, 2L of toluene, ethylene, and a catalyst represented by formula 1 were added (wherein $R_1$ was 2,6-$CH(CH_3)_2$- (the substituents at other substitution sites of a benzene ring were H atoms), $R_2$ was 4-$OCH_3$- (all substituents at substitution sites of a pyridine ring were H atoms), $R_7$ was methyl, and X was chlorine) (2.260 mmol), the materials were rapidly stirred with a mechanical stirrer to uniformly disperse a mixed system; the uniformly dispersed mixed system was heated to 39°C, the ethylene monomer was maintained at a constant pressure (4.9 bar) atmosphere, methylaluminoxane (MAO) (1.36 mol) was then added to initiate polymerization of ethylene, after polymerization was performed for 2min, the introducing of ethylene monomer was stopped;

the 1,3-butadiene monomer was introduced into the polymerization equipment to purge unpolymerized ethylene monomer, 9.26mol of 1,3-butadiene was added after the ethylene monomer was removed completely, the atmosphere of constant pressure (2 bar) was kept, diisobutylaluminum chloride (0.679 mol) was injected to initiate the copolymerization reaction of butadiene, the copolymerization reaction temperature was 48°C, and the copolymerization time was 4h; wherein the molar ratio of the catalyst: aluminum-containing cocatalyst-1: the aluminum chloride-containing cocatalyst-2 was 1: 602: 300. The molar ratio of the catalyst: 1, 3-butadiene was 1: 4,097.

The post-treatment on the polymerization product was performed according to the method in Example 1, and 485.9g of copolymer was obtained.

(2) The resulting copolymers were characterized: FT-IR (KBr, $cm^{-1}$) (a spectrogram was obtained, the characteristic peaks of butadiene rubber with wave numbers of 1,644 $cm^{-1}$ and 734 $cm^{-1}$ and a polyethylene segment with a wave number of 719 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 1.3 wt%, and the butadiene rubber segment content was 98.7 wt%; in the butadiene rubber segment, the content of cis-1,4-structure was 98.0 mol%, the content of trans-1,4-structure was 1.2 mol%, and the content of 1,2-structure was 0.8 mol%;
according to the DSC test data, for the copolymer, Tg = -111.7°C, Tm = 127.3°C, Tc = 109.6°C, and crystallinity of the copolymer was 0.9%; the continuous methylene sequence length was within the range of 165-264; according to the GPC test data, the number average molecular weight of the copolymer was 336,000 g/mol, and the molecular weight distribution was 2.75.

Example 3

(1) The polymerization reaction equipment was circulated by using a double-row pipe operation technology three times, 3L of toluene, ethylene, and a catalyst represented by formula 1 were added (wherein $R_1$ was 2,4,6-$CH_3$- (the substituents at other substitution sites of a benzene ring were H atoms), $R_2$ was 4-F- (all substituents at substitution sites of a pyridine ring were H atoms), $R_7$ was methyl, and X was chlorine) (2.260 mmol), the materials were rapidly stirred with a mechanical stirrer to uniformly disperse a mixed system; the uniformly dispersed mixed system was heated to 35°C, the ethylene monomer was maintained at a constant pressure (4 bar) atmosphere, diethyl aluminum chloride (0.113 mol) was then added to initiate polymerization of ethylene after polymerization was performed for 10min, the introducing of ethylene monomer was stopped;

the 1,3-butadiene monomer was introduced into the polymerization equipment to purge unpolymerized ethylene monomer, 12mol of 1,3-butadiene was added after the ethylene monomer was removed completely, the atmosphere of constant pressure (4 bar) was kept, diisobutylaluminum chloride (0.679 mol) was injected to initiate the copolymerization reaction of butadiene, the copolymerization reaction temperature was 50°C, and the copolymerization time was 2h; wherein the molar ratio of the catalyst: aluminum-containing cocatalyst-1: the aluminum chloride-containing cocatalyst-2 was 1: 50: 300. The molar ratio of the catalyst: 1, 3-butadiene was 1: 5,310.
The post-treatment on the polymerization product was performed according to the method in Example 1, and 595.1g of copolymer was obtained.

(2) The resulting copolymers were characterized: FT-IR (KBr, $cm^{-1}$) (a spectrogram was obtained, the characteristic peaks of butadiene rubber with wave numbers of 1,644 $cm^{-1}$ and 738 $cm^{-1}$ and a polyethylene segment with a wave number of 720 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 1.7 wt%, and the butadiene rubber segment content was 98.3 wt%; in the butadiene rubber segment, the content of cis-1,4-structure was 97.8 mol%, the content of trans-1,4-structure was 1.3 mol%, and the content of 1,2-structure was 0.9 mol%;
according to the DSC test data, for the copolymer, Tg = -107.9°C, Tm = 129.4°C, Tc = 111.5°C, and crystallinity of the copolymer was 1.2%; the continuous methylene sequence length was within the range of 182-302; according to the GPC test data, the number average molecular weight of the copolymer was 411,000 g/mol, and the molecular weight distribution was 2.82.

Example 4

(1) The polymerization reaction equipment was circulated by using a double-row pipe operation technology three times, 4L of toluene, ethylene, and a catalyst represented by formula 1 were added (wherein $R_1$ was 2,6-F- (the substituents at other substitution sites of a benzene ring were H atoms), $R_2$ was 4-$CF_3$- (all substituents at substitution sites of a pyridine ring were H atoms), $R_7$ was ethyl, and X was chlorine) (2.260 mmol), the materials were rapidly stirred with a mechanical stirrer to uniformly disperse a mixed system; the uniformly dispersed mixed system was heated to 30°C, the ethylene monomer was maintained at a constant pressure (24 bar) atmosphere, methylaluminoxane (MAO) (0.679 mol) was then added to initiate polymerization of ethylene after polymerization was performed

for 7min, the introducing of ethylene monomer was stopped;

the 1,3-butadiene monomer was introduced into the polymerization equipment to purge unpolymerized ethylene monomer, 17.2mol of 1,3-butadiene was added after the ethylene monomer was removed completely, the atmosphere of constant pressure (2.5 bar) was kept, diisobutylaluminum chloride (0.679 mol) was injected to initiate the copolymerization reaction of butadiene, the copolymerization reaction temperature was 50°C, and the copolymerization time was 4h; wherein the molar ratio of the catalyst: aluminum-containing cocatalyst-1: the aluminum chloride-containing cocatalyst-2 was 1: 300: 300. The molar ratio of the catalyst: 1, 3-butadiene was 1: 7,611.
The post-treatment on the polymerization product was performed according to the method in Example 1, and 995.1g of copolymer was obtained.

(2) The resulting copolymers were characterized: FT-IR (KBr, $cm^{-1}$) (a spectrogram was obtained, the characteristic peaks of butadiene rubber with wave numbers of 1,647 $cm^{-1}$ and 741 $cm^{-1}$ and a polyethylene segment with a wave number of 722 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 8.2 wt%, and the butadiene rubber segment content was 91.8 wt%; in the butadiene rubber segment, the content of cis-1,4-structure was 96.5 mol%, the content of trans-1,4-structure was 2.2 mol%, and the content of 1,2-structure was 1.3 mol%;
according to the DSC test data, for the copolymer, Tg = -113.9°C, Tm = 132.8°C, Tc = 114.1°C, and crystallinity of the copolymer was 6.1%; the continuous methylene sequence length was within the range of 243-394; according to the GPC test data, the number average molecular weight of the copolymer was 677,000 g/mol, and the molecular weight distribution was 3.11.

Example 5

(1) The polymerization reaction equipment was circulated by using a double-row pipe operation technology three times, 2L of toluene, ethylene, and a catalyst represented by formula 1 were added (wherein $R_1$ was 2,6-$CH_2CH_3$- (the substituents at other substitution sites of a benzene ring were H atoms), $R_2$ was 4-$CH_3$- (all substituents at substitution sites of a pyridine ring were H atoms), $R_7$ was H, and X was bromine) (2.260 mmol), the materials were rapidly stirred with a mechanical stirrer to uniformly disperse a mixed system; the uniformly dispersed mixed system was heated to 40°C, the ethylene monomer was maintained at a constant pressure (5.9 bar) atmosphere, methylaluminoxane (MAO) (1.131 mol) was then added to initiate polymerization of ethylene, after polymerization was performed for 9min, the introducing of ethylene monomer was stopped;

the 1,3-butadiene monomer was introduced into the polymerization equipment to purge unpolymerized ethylene monomer, 3.7mol of 1,3-butadiene was added after the ethylene monomer was removed completely, the atmosphere of constant pressure (5 bar) was kept, diisobutylaluminum chloride (1.131 mol) was injected to initiate the copolymerization reaction of butadiene, the copolymerization reaction temperature was 52°C, and the copolymerization time was 1h; wherein the molar ratio of the catalyst: aluminum-containing cocatalyst-1: the aluminum chloride-containing cocatalyst-2 was 1: 500: 500. The molar ratio of the catalyst: 1, 3-butadiene was 1: 1,637.
The post-treatment on the polymerization product was performed according to the method in Example 1, and 201.7g of copolymer was obtained.

(2) The resulting copolymers were characterized: FT-IR (KBr, $cm^{-1}$) (a spectrogram was obtained, the characteristic peaks of butadiene rubber with wave numbers of 1,649 $cm^{-1}$ and 741 $cm^{-1}$ and a polyethylene segment with a wave number of 721 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 5.7 wt%, and the butadiene rubber segment content was 94.3 wt%; in the butadiene rubber segment, the content of cis-1,4-structure was 97.2 mol%, the content of trans-1,4-structure was 1.7 mol%, and the content of 1,2-structure was 1.1 mol%;
according to the DSC test data, for the copolymer, Tg = -106.9°C, Tm = 134.2°C, Tc = 115.9°C, and crystallinity of the copolymer was 4.2%; the continuous methylene sequence length was within the range of 271-446; according to the GPC test data, the number average molecular weight of the copolymer was 142,000 g/mol, and the molecular weight distribution was 3.04.

Example 6

(1) The polymerization reaction equipment was circulated by using a double-row pipe operation technology three times, 2L of toluene, ethylene, and a catalyst represented by formula 1 were added (wherein $R_1$ was 2,6-$CH_2CH_3$- (the substituents at other substitution sites of a benzene ring were H atoms), $R_2$ was 4-$N(CH_3)_2$- (all substituents at substitution sites of a pyridine ring were H atoms), $R_7$ was phenyl, and X was chlorine) (2.260 mmol), the materials were rapidly stirred with a mechanical stirrer to uniformly disperse a mixed system; the uniformly dispersed mixed system was heated to 33°C, the ethylene monomer was maintained at a constant pressure (5 bar) atmosphere, modified methylaluminoxane (MMAO) (1.584 mol) was then added to initiate polymerization of ethylene, after polymerization was performed for 18min, the introducing of ethylene monomer was stopped;

the 1,3-butadiene monomer was introduced into the polymerization equipment to purge unpolymerized ethylene monomer, 5.19mol of 1,3-butadiene was added after the ethylene monomer was removed completely, the atmosphere of constant pressure (3 bar) was kept, diisobutylaluminum chloride (1.584 mol) was injected to initiate the copolymerization reaction of butadiene, the copolymerization reaction temperature was 53°C, and the copolymerization time was 2h; wherein the molar ratio of the catalyst: aluminum-containing cocatalyst-1: the aluminum chloride-containing cocatalyst-2 was 1: 701: 701. The molar ratio of the catalyst: 1, 3-butadiene was 1: 2,296.

The post-treatment on the polymerization product was performed according to the method in Example 1, and 301.7g of copolymer was obtained.

(2) The resulting copolymers were characterized: FT-IR (KBr, $cm^{-1}$) (a spectrogram was obtained, the characteristic peaks of butadiene rubber with wave numbers of 1,648 $cm^{-1}$ and 737 $cm^{-1}$ and a polyethylene segment with a wave number of 723 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented, as shown in FIG. 5); the polyethylene segment content was 12.9 wt%, and the butadiene rubber segment content was 87.1 wt%; in the butadiene rubber segment, the content of cis-1,4-structure was 96.0 mol%, the content of trans-1,4-structure was 2.6 mol%, and the content of 1,2-structure was 1.4 mol%;

according to the DSC test data, for the copolymer, Tg = -110.1°C, Tm = 136.7°C, Tc = 115.2°C, and crystallinity of the copolymer was 9.7%; the continuous methylene sequence length was within the range of 361-592; according to the GPC test data, the number average molecular weight of the copolymer was 208,000 g/mol, and the molecular weight distribution was 3.40.

Example 7

(1) The polymerization reaction equipment was circulated by using a double-row pipe operation technology three times, 2L of toluene, ethylene, and a catalyst represented by formula 1 were added (wherein $R_1$ was 2-$C(CH_3)_3$-6-$CH_3$- (the substituents at other substitution sites of a benzene ring were H atoms), $R_2$ was 4-Cl- (all substituents at substitution sites of a pyridine ring were H atoms), $R_7$ was chlorine, and X was bromine) (2.260 mmol), the materials were rapidly stirred with a mechanical stirrer to uniformly disperse a mixed system; the uniformly dispersed mixed system was heated to 37°C, the ethylene monomer was maintained at a constant pressure (4 bar) atmosphere, diethylaluminium chloride (45.2 mmol) was then added to initiate polymerization of ethylene, after polymerization was performed for 60min, the introducing of ethylene monomer was stopped;

the 1,3-butadiene monomer was introduced into the polymerization equipment to purge unpolymerized ethylene monomer, 8.3mol of 1,3-butadiene was added after the ethylene monomer was removed completely, the atmosphere of constant pressure (2.2 bar) was kept, diisobutylaluminum chloride (2.036 mol) was injected to initiate the copolymerization reaction of butadiene, the copolymerization reaction temperature was 54°C, and the copolymerization time was 3h; wherein the molar ratio of the catalyst: aluminum-containing cocatalyst-1: the aluminum chloride-containing cocatalyst-2 was 1: 20: 901. The molar ratio of the catalyst: 1, 3-butadiene was 1: 3,673.

The post-treatment on the polymerization product was performed according to the method in Example 1, and 502.3g of copolymer was obtained.

(2) The resulting copolymers were characterized: FT-IR (KBr, $cm^{-1}$) (a spectrogram was obtained, the characteristic peaks of butadiene rubber with wave numbers of 1,639 $cm^{-1}$ and 740 $cm^{-1}$ and a polyethylene segment with a wave number of 722 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 4.9 wt%, and the butadiene rubber segment content was 95.1 wt%; in the butadiene rubber segment, the content of cis-1,4-structure was 95.8 mol%, the content of trans-1,4-structure was 2.7 mol%, and the content of 1,2-structure was 1.5 mol%;
according to the DSC test data, for the copolymer, Tg = -108.5°C, Tm = 133.2°C, Tc = 112.5°C, and crystallinity of the copolymer was 3.6%; the continuous methylene sequence length was within the range of 247-408; according to the GPC test data, the number average molecular weight of the copolymer was 350,000 g/mol, and the molecular weight distribution was 2.97.

Example 8

(1) The polymerization reaction equipment was circulated by using a double-row pipe operation technology three times, 2L of toluene, ethylene, and a catalyst represented by formula 2 were added (wherein $R_3$ was 4,6-$CH_3$- (the substituents at other substitution sites of a pyridine ring substituted by $R_3$ were H atoms), $R_4$ was H (all substituents at substitution sites of a pyridine ring substituted by $R_4$ were H atoms), X was chlorine) (2.260 mmol), the materials were rapidly stirred with a mechanical stirrer to uniformly disperse a mixed system; the uniformly dispersed mixed system was heated to 60°C, the ethylene monomer was maintained at a constant pressure (50 bar) atmosphere, methylaluminoxane (0.113 mol) was then added to initiate polymerization of ethylene after polymerization was performed for 19min, the introducing of ethylene monomer was stopped;

the 1,3-butadiene monomer was introduced into the polymerization equipment to purge unpolymerized ethylene monomer, 5.56mol of 1,3-butadiene was added after the ethylene monomer was removed completely, the atmosphere of constant pressure (3.5 bar) was kept, diisobutylaluminum chloride (1.584 mol) was injected to initiate the copolymerization reaction of butadiene, the copolymerization reaction temperature was 58°C, and the copolymerization time was 3.5h; wherein the molar ratio of the catalyst: aluminum-containing cocatalyst-1: the aluminum chloride-containing cocatalyst-2 was 1: 50: 701. The molar ratio of the catalyst: 1, 3-butadiene was 1: 2,460.
The post-treatment on the polymerization product was performed according to the method in Example 1, and 491.1g of copolymer was obtained.

(2) The resulting copolymers were characterized: FT-IR (KBr, $cm^{-1}$) (a spectrogram was obtained, the characteristic peaks of butadiene rubber with wave numbers of 1,639 $cm^{-1}$ and 739 $cm^{-1}$ and a polyethylene segment with a wave number of 720 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 57.9 wt%, and the butadiene rubber segment content was 42.1 wt%; in the butadiene rubber segment, the content of cis-1,4-structure was 93.2 mol%, the content of trans-1,4-structure was 4.2 mol%, and the content of 1,2-structure was 2.6 mol%;
according to the DSC test data, for the copolymer, Tg = -110.9°C, Tm = 139.2°C, Tc = 118.8°C, and crystallinity of the copolymer was 46.3%; the continuous methylene sequence length was within the range of 539-860; according to the GPC test data, the number average molecular weight of the copolymer was 333,000 g/mol, and the molecular weight distribution was 5.10.

Example 9

(1) The polymerization reaction equipment was circulated by using a double-row pipe operation technology three times, 2L of toluene, ethylene, and a catalyst represented by formula 2 were added (wherein $R_3$ was 4-$N(CH_3)_2$-6-$CH_2CH_3$- (the substituents at other substitution sites of a pyridine ring substituted by $R_3$ were H atoms), $R_4$ was 4-$OCH_3$- (all substituents at substitution sites of a pyridine ring substituted by $R_4$ were H atoms), X was bromine) (2.260 mmol), the materials were rapidly stirred with a mechanical stirrer to uniformly disperse a mixed system; the uniformly dispersed mixed system was heated to 50°C, the ethylene monomer was maintained at a constant pressure (8 bar) atmosphere, diethylaluminium chloride (0.684 mol) was then added to initiate polymerization of ethylene, after

polymerization was performed for 16min, the introducing of ethylene monomer was stopped;

the 1,3-butadiene monomer was introduced into the polymerization equipment to purge unpolymerized ethylene monomer, 8.61mol of 1,3-butadiene was added after the ethylene monomer was removed completely, the atmosphere of constant pressure (3.5 bar) was kept, diisobutylaluminum chloride (0.684 mol) was injected to initiate the copolymerization reaction of butadiene, the copolymerization reaction temperature was 60°C, and the copolymerization time was 3.8h; wherein the molar ratio of the catalyst: aluminum-containing cocatalyst-1: the aluminum chloride-containing cocatalyst-2 was 1: 303: 303. The molar ratio of the catalyst: 1, 3-butadiene was 1: 3,810.

The post-treatment on the polymerization product was performed according to the method in Example 1, and 468.3g of copolymer was obtained.

(2) The resulting copolymers were characterized: FT-IR (KBr, $cm^{-1}$) (a spectrogram was obtained, the characteristic peaks of butadiene rubber with wave numbers of 1,649 $cm^{-1}$ and 729 $cm^{-1}$ and a polyethylene segment with a wave number of 719 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 26.5 wt%, and the butadiene rubber segment content was 73.5 wt%; in the butadiene rubber segment, the content of cis-1,4-structure was 94.7 mol%, the content of trans-1,4-structure was 3.2 mol%, and the content of 1,2-structure was 2.1 mol%;

according to the DSC test data, for the copolymer, Tg = -106.4°C, Tm = 137.7°C, Tc = 117.2°C, and crystallinity of the copolymer was 20.2%; the continuous methylene sequence length was within the range of 417-672; according to the GPC test data, the number average molecular weight of the copolymer was 314,000 g/mol, and the molecular weight distribution was 4.03.

Example 10

(1) The polymerization reaction equipment was circulated by using a double-row pipe operation technology three times, 2L of toluene, ethylene, and a catalyst represented by formula 2 were added (wherein $R_3$ was 4-$CF_3$-6-$C_6H_5$- (the substituents at other substitution sites of a pyridine ring substituted by $R_3$ were H atoms), $R_4$ was 4-F- (all substituents at substitution sites of a pyridine ring substituted by $R_4$ were H atoms), X was chlorine) (2.260 mmol), the materials were rapidly stirred with a mechanical stirrer to uniformly disperse a mixed system; the uniformly dispersed mixed system was heated to 55°C, the ethylene monomer was maintained at a constant pressure (4 bar) atmosphere, methylaluminoxane (MAO) (1.584 mol) was then added to initiate polymerization of ethylene, after polymerization was performed for 7min, the introducing of ethylene monomer was stopped;

the 1,3-butadiene monomer was introduced into the polymerization equipment to purge unpolymerized ethylene monomer, 3.33mol of 1,3-butadiene was added after the ethylene monomer was removed completely, the atmosphere of constant pressure (2.5 bar) was kept, diisobutylaluminum chloride (1.584 mol) was injected to initiate the copolymerization reaction of butadiene, the copolymerization reaction temperature was 55°C, and the copolymerization time was 1h; wherein the molar ratio of the catalyst: aluminum-containing cocatalyst-1: the aluminum chloride-containing cocatalyst-2 was 1: 701: 701. The molar ratio of the catalyst: 1, 3-butadiene was 1: 1,473.

The post-treatment on the polymerization product was performed according to the method in Example 1, and 191.1g of copolymer was obtained.

(2) The resulting copolymers were characterized: FT-IR (KBr, $cm^{-1}$) (a spectrogram was obtained, the characteristic peaks of butadiene rubber with wave numbers of 1,646 $cm^{-1}$ and 741 $cm^{-1}$ and a polyethylene segment with a wave number of 722 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 41.9 wt%, and the butadiene rubber segment content was 58.1 wt%; in the butadiene rubber segment, the content of cis-1,4-structure was 93.8 mol%, the content of trans-1,4-structure was 3.8 mol%, and the content of 1,2-structure was 2.4 mol%;

according to the DSC test data, for the copolymer, Tg = -102.5°C, Tm = 138.6°C, Tc = 116.9°C, and crystallinity of the copolymer was 32.7%; the continuous methylene sequence length was within the range of 475-780; according to the GPC test data, the number average molecular weight of the copolymer was 139,000 g/mol, and the molecular weight distribution was 4.62.

Example 11

(1) The polymerization reaction equipment was circulated by using a double-row pipe operation technology three times, 2L of toluene, ethylene, and a catalyst represented by formula 2 were added (wherein $R_3$ was 6-CH($C_6H_5$)$_2$- (the substituents at other substitution sites of a pyridine ring substituted by $R_3$ were H atoms), $R_4$ was 4-Cl (all substituents at substitution sites of a pyridine ring substituted by $R_4$ were H atoms), X was chlorine) (2.260 mmol), the materials were rapidly stirred with a mechanical stirrer to uniformly disperse a mixed system; the uniformly dispersed mixed system was heated to 37°C, the ethylene monomer was maintained at a constant pressure (2.9 bar) atmosphere, methylaluminoxane (MAO) (1.584 mol) was then added to initiate polymerization of ethylene, after polymerization was performed for 14min, the introducing of ethylene monomer was stopped;
the 1,3-butadiene monomer was introduced into the polymerization equipment to purge unpolymerized ethylene monomer, 2.78mol of 1,3-butadiene was added after the ethylene monomer was removed completely, the atmosphere of constant pressure (3 bar) was kept, diethylaluminium chloride (1.584 mol) was injected to initiate the copolymerization reaction of butadiene, the copolymerization reaction temperature was 50°C, and the copolymerization time was 1h; a toluene solution of 2,2-methylene-bis-(4-methyl-6-tert-butylphenol) with a mass concentration of 5% was subsequently added as a stabilizer, 20mL of a hydrochloride methanol solution having the mass concentration 4% of hydrochloric acid was added to the polymerization system to terminate the reaction, and finally, the polymerization product was washed with a methanol solution and a toluene solution sequentially for 3 times, and dried in vacuum to obtain 261.3g of copolymer. Wherein the molar ratio of the catalyst: aluminum-containing cocatalyst-1: the aluminum chloride-containing cocatalyst-2 was 1: 701: 701. The molar ratio of the catalyst: 1, 3-butadiene was 1: 1,230.
(2) The resulting copolymers were characterized: FT-IR (KBr, $cm^{-1}$) (a spectrogram was obtained, the characteristic peaks of butadiene rubber with wave numbers of 1,647 $cm^{-1}$ and 731 $cm^{-1}$ and a polyethylene segment with a wave number of 720 $cm^{-1}$ as shown in FIG. 4); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 68.7 wt%, and the butadiene rubber segment content was 31.3 wt%; in the butadiene rubber segment, the content of cis-1,4-structure was 92.5 mol%, the content of trans-1,4-structure was 4.7 mol%, and the content of 1,2-structure was 2.8 mol%;
according to the DSC test data, as shown in FIG. 3, for the copolymer, Tg = -110.6°C, Tm = 134.4°C, Tc = 115.1°C, and crystallinity of the copolymer was 56.0%; the continuous methylene sequence length was within the range of 278-456; according to the GPC test data, the number average molecular weight of the copolymer was 183,000 g/mol, and the molecular weight distribution was 5.75.

Example 12

(1) The polymerization reaction equipment was circulated by using a double-row pipe operation technology three times, 2L of toluene, ethylene, and a catalyst represented by formula 3 were added (wherein $R_5$ was 4-$CH_3$- (the substituents at other substitution sites of a dihydro oxazole ring were H atoms), $R_6$ was H (all substituents at substitution sites of a pyridine ring were H atoms), X was chlorine) (2.260 mmol), the materials were rapidly stirred with a mechanical stirrer to uniformly disperse a mixed system; the uniformly dispersed mixed system was heated to 32°C, the ethylene monomer was maintained at a constant pressure (4 bar) atmosphere, methylaluminoxane (MAO) (0.452 mol) was then added to initiate polymerization of ethylene, after polymerization was performed for 20min, the introducing of ethylene monomer was stopped;

the 1,3-butadiene monomer was introduced into the polymerization equipment to purge unpolymerized ethylene monomer, 3.52mol of 1,3-butadiene was added after the ethylene monomer was removed completely, the atmosphere of constant pressure (3.2 bar) was kept, diethylaluminium chloride (0.678 mol) was injected to initiate the copolymerization reaction of butadiene, the copolymerization reaction temperature was 48°C, and the copolymerization time was 1h; wherein the molar ratio of the catalyst: aluminum-containing cocatalyst-1: the aluminum chloride-containing cocatalyst-2 was 1: 200: 300. The molar ratio of the catalyst: 1, 3-butadiene was 1: 1,558.
The post-treatment on the polymerization product was performed according to the method in Example 11, and 391.1g of copolymer was obtained.

(2) The resulting copolymers were characterized: FT-IR (KBr, $cm^{-1}$) (a spectrogram was obtained, the characteristic peaks of butadiene rubber with wave numbers of 1,648 $cm^{-1}$ and 741 $cm^{-1}$ and a polyethylene segment with a wave number of 721 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 64.1 wt%, and the butadiene rubber segment content was 35.9 wt%; in the butadiene rubber segment, the content of cis-1,4-structure was 92.7 mol%, the content of trans-1,4-structure was 4.6 mol%, and the content of 1,2-structure was 2.7 mol%;
according to the DSC test data, for the copolymer, Tg = -102.4°C, Tm = 140.2°C, Tc = 117.8°C, and crystallinity of the copolymer was 51.9%; the continuous methylene sequence length was within the range of 645-1,060; according to the GPC test data, the number average molecular weight of the copolymer was 258,000 g/mol, and the molecular weight distribution was 5.68.

Example 13

(1) The polymerization reaction equipment was circulated by using a double-row pipe operation technology three times, 3L of toluene, ethylene, and a catalyst represented by formula 3 were added (wherein $R_5$ was 4-$CH_2CH_3$- (the substituents at other substitution sites of a dihydro oxazole ring were H atoms), $R_6$ was 4-$CH_3$- (all substituents at substitution sites of a pyridine ring were H atoms), X was chlorine) (2.260 mmol), the materials were rapidly stirred with a mechanical stirrer to uniformly disperse a mixed system; the uniformly dispersed mixed system was heated to 42°C, the ethylene monomer was maintained at a constant pressure (9 bar) atmosphere, methylaluminoxane (MAO) (1.584 mol) was then added to initiate polymerization of ethylene, after polymerization was performed for 20min, the introducing of ethylene monomer was stopped;

the 1,3-butadiene monomer was introduced into the polymerization equipment to purge unpolymerized ethylene monomer, 7.56mol of 1,3-butadiene was added after the ethylene monomer was removed completely, the atmosphere of constant pressure (2.5 bar) was kept, diisobutylaluminium chloride (1.584 mol) was injected to initiate the copolymerization reaction of butadiene, the copolymerization reaction temperature was 45°C, and the copolymerization time was 1.6h; wherein the molar ratio of the catalyst: aluminum-containing cocatalyst-1: the aluminum chloride-containing cocatalyst-2 was 1: 701: 3,345, the molar ratio of the catalyst: 1, 3-butadiene was 1: 3,345.
The post-treatment on the polymerization product was performed according to the method in Example 11, and 491.9g of copolymer was obtained.

(2) The resulting copolymers were characterized: FT-IR (KBr, $cm^{-1}$) (a spectrogram was obtained, the characteristic peaks of butadiene rubber with wave numbers of 1,647 $cm^{-1}$ and 738 $cm^{-1}$ and a polyethylene segment with a wave number of 721 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 37.9 wt%, and the butadiene rubber segment content was 62.1 wt%; in the butadiene rubber segment, the content of cis-1,4-structure was 94.0 mol%, the content of trans-1,4-structure was 3.7 mol%, and the content of 1,2-structure was 2.3 mol%;
according to the DSC test data, for the copolymer, Tg = -109.9°C, Tm = 136.3°C, Tc = 115.9°C, and crystallinity of the copolymer was 29.6%; the continuous methylene sequence length was within the range of 342-563; according to the GPC test data, the number average molecular weight of the copolymer was 320,000 g/mol, and the molecular weight distribution was 4.45.

Example 14

(1) The polymerization reaction equipment was circulated by using a double-row pipe operation technology three times, 4L of toluene, ethylene, and a catalyst represented by formula 3 were added (wherein $R_5$ was 4-$CH(CH_3)_2$- (the substituents at other substitution sites of a dihydro oxazole ring were H atoms), $R_6$ was 4-$OCH_3$- (all substituents at substitution sites of a pyridine ring were H atoms), X was chlorine) (2.260 mmol), the materials were rapidly stirred with a mechanical stirrer to uniformly disperse a mixed system; the uniformly dispersed mixed system was heated to 50°C, the ethylene monomer was maintained at a constant pressure (40 bar) atmosphere, methylaluminoxane (MAO) (0.904 mol) was then added to initiate polymerization of ethylene after polymerization was performed for 18min, the

introducing of ethylene monomer was stopped;

the 1,3-butadiene monomer was introduced into the polymerization equipment to purge unpolymerized ethylene monomer, 2.78mol of 1,3-butadiene was added after the ethylene monomer was removed completely, the atmosphere of constant pressure (4.2 bar) was kept, ethylaluminium sesquichloride (0.904 mol) was injected to initiate the copolymerization reaction of butadiene, the copolymerization reaction temperature was 45°C, and the copolymerization time was 1h; wherein the molar ratio of the catalyst: aluminum-containing cocatalyst-1: the aluminum chloride-containing cocatalyst-2 was 1: 400: 400, the molar ratio of the catalyst: 1, 3-butadiene was 1: 1,230.

The post-treatment on the polymerization product was performed according to the method in Example 11, and 431.5g of copolymer was obtained.

(2) The resulting copolymers were characterized: FT-IR (KBr, $cm^{-1}$) (a spectrogram was obtained, the characteristic peaks of butadiene rubber with wave numbers of 1,649 $cm^{-1}$ and 733 $cm^{-1}$ and a polyethylene segment with a wave number of 722 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 72.9 wt%, and the butadiene rubber segment content was 27.1 wt%; in the butadiene rubber segment, the content of cis-1,4-structure was 92.0 mol%, the content of trans-1,4-structure was 5.1 mol%, and the content of 1,2-structure was 2.9 mol%;

according to the DSC test data, for the copolymer, Tg = -101.7°C, Tm = 142.1°C, Tc = 120.9°C, and crystallinity of the copolymer was 59.8%; the continuous methylene sequence length was within the range of 922-1,800; according to the GPC test data, the number average molecular weight of the copolymer was 303,000 g/mol, and the molecular weight distribution was 5.98.

Example 15

(1) The polymerization reaction equipment was circulated by using a double-row pipe operation technology three times, 2L of toluene, ethylene, and a catalyst represented by formula 3 were added (wherein $R_5$ was 4-$C_6H_5$- (the substituents at other substitution sites of a dihydro oxazole ring were H atoms), $R_6$ was 4-$CH_3$- (all substituents at substitution sites of a pyridine ring were H atoms), X was chlorine) (2.260 mmol), the materials were rapidly stirred with a mechanical stirrer to uniformly disperse a mixed system; the uniformly dispersed mixed system was heated to 45°C, the ethylene monomer was maintained at a constant pressure (4 bar) atmosphere, methylaluminoxane (MAO) (1.131 mol) was then added to initiate polymerization of ethylene, after polymerization was performed for 7min, the introducing of ethylene monomer was stopped;

the 1,3-butadiene monomer was introduced into the polymerization equipment to purge unpolymerized ethylene monomer, 16.8mol of 1,3-butadiene was added after the ethylene monomer was removed completely, the atmosphere of constant pressure (4.5 bar) was kept, ethylaluminium sesquichloride (1.131 mol) was injected to initiate the copolymerization reaction of butadiene, the copolymerization reaction temperature was 40°C, and the copolymerization time was 4h; wherein the molar ratio of the catalyst: aluminum-containing cocatalyst-1: the aluminum chloride-containing cocatalyst-2 was 1: 500: 500, the molar ratio of the catalyst: 1, 3-butadiene was 1: 7,434.

The post-treatment on the polymerization product was performed according to the method in Example 11, and 847.9g of copolymer was obtained.

(2) The resulting copolymers were characterized: FT-IR (KBr, $cm^{-1}$) (a spectrogram was obtained, the characteristic peaks of butadiene rubber with wave numbers of 1,646 $cm^{-1}$ and 738 $cm^{-1}$ and a polyethylene segment with a wave number of 721 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 4.2 wt%, and the butadiene rubber segment content was 95.8 wt%; in the butadiene rubber segment, the content of cis-1,4-structure was 97.5 mol%, the content of trans-1,4-structure was 1.5 mol%, and the content of 1,2-structure was 1.0 mol%;

according to the DSC test data, for the copolymer, Tg = -111.7°C, Tm = 128.1°C, Tc = 108.9°C, and crystallinity of the copolymer was 3.0%; the continuous methylene sequence length was within the range of 170-278; according to the GPC test data, the number average molecular weight of the copolymer was 586,000 g/mol, and the molecular weight distribution was 2.97.

Example 16

(1) The polymerization reaction equipment was circulated by using a double-row pipe operation technology three times, 2L of toluene, ethylene, and a catalyst represented by formula 1 were added (wherein $R_1$ was 2,6-$CH_3$- (the substituents at other substitution sites of a benzene ring were H atoms), $R_2$ was H (all substituents at substitution sites of a pyridine ring were H atoms), $R_7$ was methyl, and X was chlorine) (2.260 mmol), the materials were rapidly stirred with a mechanical stirrer to uniformly disperse a mixed system; the uniformly dispersed mixed system was heated to 38°C, the ethylene monomer was maintained at a constant pressure (4 bar) atmosphere, methylaluminoxane (MAO) (1.584 mol) was then added to initiate polymerization of ethylene, after polymerization was performed for 20min, the introducing of ethylene monomer was stopped;

the 1,3-butadiene monomer was introduced into the polymerization equipment to purge unpolymerized ethylene monomer, 9.02mol of 1,3-butadiene was added after the ethylene monomer was removed completely, the atmosphere of constant pressure (2.8 bar) was kept, diisopropylaluminium chloride (1.584 mol) was injected to initiate the copolymerization reaction of butadiene, the copolymerization reaction temperature was 45°C, and the copolymerization time was 3h; wherein the molar ratio of the catalyst: aluminum-containing cocatalyst-1: the aluminum chloride-containing cocatalyst-2 was 1: 701: 701, the molar ratio of the catalyst: 1, 3-butadiene was 1: 3,991.
The post-treatment on the polymerization product was performed according to the method in Example 11, and 496.4g of copolymer was obtained.

(2) The resulting copolymers were characterized: FT-IR (KBr, $cm^{-1}$) (a spectrogram was obtained, the characteristic peaks of butadiene rubber with wave numbers of 1,647 $cm^{-1}$ and 738 $cm^{-1}$ and a polyethylene segment with a wave number of 721 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 21.1 wt%, and the butadiene rubber segment content was 78.9wt% in the butadiene rubber segment, the content of cis-1,4-structure was 95.0 mol%, the content of trans-1,4-structure was 3.1 mol%, and the content of 1,2-structure was 1.9 mol%;
according to the DSC test data, for the copolymer, Tg = -108.9°C, Tm = 135.2°C, Tc = 113.9°C, and crystallinity of the copolymer was 16.0%; the continuous methylene sequence length was within the range of 302-496; according to the GPC test data, the number average molecular weight of the copolymer was 338,000 g/mol, and the molecular weight distribution was 3.83.

Example 17

(1) The polymerization reaction equipment was circulated by using a double-row pipe operation technology three times, 2L of toluene, ethylene, and a catalyst represented by formula 1 were added (wherein $R_1$ was 2,6-$CH_2CH_3$- (the substituents at other substitution sites of a benzene ring were H atoms), $R_2$ was H (all substituents at substitution sites of a pyridine ring were H atoms), $R_7$ was methyl, and X was chlorine) (2.260 mmol), the materials were rapidly stirred with a mechanical stirrer to uniformly disperse a mixed system; the uniformly dispersed mixed system was heated to 45°C, the ethylene monomer was maintained at a constant pressure (4 bar) atmosphere, methylaluminoxane (MAO) (2.034 mol) was then added to initiate polymerization of ethylene after polymerization was performed for 20min, the introducing of ethylene monomer was stopped;

the 1,3-butadiene monomer was introduced into the polymerization equipment to purge unpolymerized ethylene monomer, 8.57mol of 1,3-butadiene was added after the ethylene monomer was removed completely, the atmosphere of constant pressure (4 bar) was kept, diisopropylaluminium chloride (2.034 mol) was injected to initiate the copolymerization reaction of butadiene, the copolymerization reaction temperature was 43°C, and the copolymerization time was 3h; wherein the molar ratio of the catalyst: aluminum-containing cocatalyst-1: the aluminum chloride-containing cocatalyst-2 was 1: 900: 900, the molar ratio of the catalyst: 1, 3-butadiene was 1: 3,792.
The post-treatment on the polymerization product was performed according to the method in Example 11, and 377.9g of copolymer was obtained.

(2) The resulting copolymers were characterized: FT-IR (KBr, $cm^{-1}$) (a spectrogram was obtained, the characteristic peaks of butadiene rubber with wave numbers of 1,647 $cm^{-1}$ and 741 $cm^{-1}$ and a polyethylene segment with a wave number of 722 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 18.5 wt%, and the butadiene rubber segment content was 81.5 wt%; in the butadiene rubber segment, the content of cis-1,4-structure was 95.3 mol%, the content of trans-1,4-structure was 3.0 mol%, and the content of 1,2-structure was 1.7 mol%;
according to the DSC test data, for the copolymer, Tg = -107.9°C, Tm = 134.5°C, Tc = 112.5°C, and crystallinity of the copolymer was 14.0%; the continuous methylene sequence length was within the range of 278-465; according to the GPC test data, the number average molecular weight of the copolymer was 256,000 g/mol, and the molecular weight distribution was 3.76.

Example 18

(1) The polymerization reaction equipment was circulated by using a double-row pipe operation technology three times, 2L of toluene, ethylene, and a catalyst represented by formula 1 were added (wherein $R_1$ was 2,6-$CH(CH_3)_2$- (the substituents at other substitution sites of a benzene ring were H atoms), $R_2$ was 4-Cl (all substituents at substitution sites of a pyridine ring were H atoms), $R_7$ was methyl, and X was bromine) (2.260 mmol), the materials were rapidly stirred with a mechanical stirrer to uniformly disperse a mixed system; the uniformly dispersed mixed system was heated to 36°C, the ethylene monomer was maintained at a constant pressure (4 bar) atmosphere, diethylaluminium chloride (226 mmol) was then added to initiate polymerization of ethylene, after polymerization was performed for 20min, the introducing of ethylene monomer was stopped;

the 1,3-butadiene monomer was introduced into the polymerization equipment to purge unpolymerized ethylene monomer, 9.39mol of 1,3-butadiene was added after the ethylene monomer was removed completely, the atmosphere of constant pressure (3.3 bar) was kept, diisopropylaluminium chloride (1.584 mol) was injected to initiate the copolymerization reaction of butadiene, the copolymerization reaction temperature was 47°C, and the copolymerization time was 3h; wherein the molar ratio of the catalyst: aluminum-containing cocatalyst-1: the aluminum chloride-containing cocatalyst-2 was 1: 100: 701, the molar ratio of the catalyst: 1, 3-butadiene was 1: 4,155.
The post-treatment on the polymerization product was performed according to the method in Example 11, and 467.1g of copolymer was obtained.

(2) The resulting copolymers were characterized: FT-IR (KBr, $cm^{-1}$) (a spectrogram was obtained, the characteristic peaks of butadiene rubber with wave numbers of 1,637 $cm^{-1}$ and 731 $cm^{-1}$ and a polyethylene segment with a wave number of 720 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 7.9 wt%, and the butadiene rubber segment content was 92.1 wt%; in the butadiene rubber segment, the content of cis-1,4-structure was 96.6 mol%, the content of trans-1,4-structure was 2.0 mol%, and the content of 1,2-structure was 1.4 mol%;
according to the DSC test data, for the copolymer, Tg = -105.9°C, Tm = 135.1°C, Tc = 115.9°C, and crystallinity of the copolymer was 5.8%; the continuous methylene sequence length was within the range of 295-493; according to the GPC test data, the number average molecular weight of the copolymer was 318,000 g/mol, and the molecular weight distribution was 3.08.

Example 19

(1) The polymerization reaction equipment was circulated by using a double-row pipe operation technology three times, 2L of toluene, ethylene, and a catalyst represented by formula 1 were added (wherein $R_1$ was 2,4,6-$CH_3$- (the substituents at other substitution sites of a benzene ring were H atoms), $R_2$ was H (all substituents at substitution sites of a pyridine ring were H atoms), $R_7$ was methyl, and X was bromine) (2.260 mmol), the materials were rapidly stirred with a mechanical stirrer to uniformly disperse a mixed system; the uniformly dispersed mixed system was heated to 43°C, the ethylene monomer was maintained at a constant pressure (5.9 bar) atmosphere, methylaluminoxane (MAO) (0.678 mol) was then added to initiate polymerization of ethylene, after polymerization was performed for

20min, the introducing of ethylene monomer was stopped;

the 1,3-butadiene monomer was introduced into the polymerization equipment to purge unpolymerized ethylene monomer, 10.7mol of 1,3-butadiene was added after the ethylene monomer was removed completely, the atmosphere of constant pressure (3.8 bar) was kept, diisopropylaluminium chloride (0.339 mol) was injected to initiate the copolymerization reaction of butadiene, the copolymerization reaction temperature was 48°C, and the copolymerization time was 3h; wherein the molar ratio of the catalyst: aluminum-containing cocatalyst-1: the aluminum chloride-containing cocatalyst-2 was 1: 300: 150, the molar ratio of the catalyst: 1, 3-butadiene was 1: 4,735.

The post-treatment on the polymerization product was performed according to the method in Example 1, and 531.7g of copolymer was obtained.

(2) The resulting copolymers were characterized: FT-IR (KBr, $cm^{-1}$) (a spectrogram was obtained, the characteristic peaks of butadiene rubber with wave numbers of 1,647 $cm^{-1}$ and 741 $cm^{-1}$ and a polyethylene segment with a wave number of 721 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 9.9 wt%, and the butadiene rubber segment content was 90.1 wt%; in the butadiene rubber segment, the content of cis-1,4-structure was 96.2 mol%, the content of trans-1,4-structure was 2.3 mol%, and the content of 1,2-structure was 1.5 mol%;

according to the DSC test data, for the copolymer, Tg = -110.8°C, Tm = 135.2°C, Tc = 117.9°C, and crystallinity of the copolymer was 7.4%; the continuous methylene sequence length was within the range of 297-502; according to the GPC test data, the number average molecular weight of the copolymer was 373,000 g/mol, and the molecular weight distribution was 3.28.

Example 20

(1) The polymerization reaction equipment was circulated by using a double-row pipe operation technology three times, 2L of toluene, ethylene, and a catalyst represented by formula 1 were added (wherein $R_1$ was 2,6-$C_6H_5$- (the substituents at other substitution sites of a benzene ring were H atoms), $R_2$ was H (all substituents at substitution sites of a pyridine ring were H atoms), $R_7$ was methyl, and X was chlorine) (2.260 mmol), the materials were rapidly stirred with a mechanical stirrer to uniformly disperse a mixed system; the uniformly dispersed mixed system was heated to 51°C, the ethylene monomer was maintained at a constant pressure (2.7 bar) atmosphere, modified methylaluminoxane (MMAO) (1.584 mol) was then added to initiate polymerization of ethylene, after polymerization was performed for 20min, the introducing of ethylene monomer was stopped;

the 1,3-butadiene monomer was introduced into the polymerization equipment to purge unpolymerized ethylene monomer, 4.94mol of 1,3-butadiene was added after the ethylene monomer was removed completely, the atmosphere of constant pressure (4 bar) was kept, diisopropylaluminium chloride (1.584 mol) was injected to alter the active centers and initiate the copolymerization reaction of butadiene monomers, the copolymerization reaction temperature was 51°C, and the copolymerization time was 3h; wherein the molar ratio of the catalyst: aluminum-containing cocatalyst-1: the aluminum chloride-containing cocatalyst-2 was 1: 701: 701, the molar ratio of the catalyst: 1,3-butadiene was 1: 2,186.

The post-treatment on the polymerization product was performed according to the method in Example 11, and 247.1g of copolymer was obtained.

(2) The resulting copolymers were characterized: FT-IR (KBr, $cm^{-1}$) (a spectrogram was obtained, the characteristic peaks of butadiene rubber with wave numbers of 1,644 $cm^{-1}$ and 739 $cm^{-1}$ and a polyethylene segment with a wave number of 720 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 24.9 wt%, and the butadiene rubber segment content was 75.1 wt%; in the butadiene rubber segment, the content of cis-1,4-structure was 94.7 mol%, the content of trans-1,4-structure was 3.2 mol%, and the content of 1,2-structure was 2.1 mol%;

according to the DSC test data, for the copolymer, Tg = -105.3°C, Tm = 136.7°C, Tc = 114.8°C, and crystallinity of the copolymer was 19.0%; the continuous methylene sequence length was within the range of 358-595; according to the GPC test data, the number average molecular weight of the copolymer was 166,000 g/mol, and the molecular weight distribution was 3.91.

Comparative Example 1

(1) The polymerization reaction equipment was circulated by using a double-row pipe operation technology three times, 2L of toluene, ethylene, and a catalyst represented by formula 1 were added (wherein $R_1$ was 2,4,6-$CH_3$- (the substituents at other substitution sites of a benzene ring were H atoms), $R_2$ was H (all substituents at substitution sites of a pyridine ring were H atoms), $R_7$ was methyl, and X was bromine) (2.260 mmol), the materials were rapidly stirred with a mechanical stirrer to uniformly disperse a mixed system; the uniformly dispersed mixed system was heated to 70°C, 3.87mol of 1,3-butadiene was added, a constant pressure (3 bar) atmosphere was maintained, diisobutylaluminium chloride (1.584 mol) was injected to initiate polymerization of butadiene monomers, the reaction time was 4h; wherein the molar ratio of the catalyst: the aluminum chloride-containing cocatalyst-2 was 1: 701, the molar ratio of the catalyst: 1,3-butadiene was 1: 1,712.

The post-treatment on the polymerization product was performed according to the method in Example 11, and 189.7g of butadiene rubber was obtained.

(2) The resulting butadiene rubber was characterized: FT-IR (KBr, $cm^{-1}$) (the characteristic peaks of butadiene rubber with wave numbers of 1,644 $cm^{-1}$ and 739 $cm^{-1}$ were shown in the obtained spectrogram); nuclear magnetic hydrogen spectrum (ppm) (the peak of butadiene rubber with a chemical shift of 5.4 was presented in the obtained spectrogram); the butadiene rubber segment content was 100.0 wt%; wherein the content of cis-1,4-structure was 98.2 mol%, the content of trans-1,4-structure was 1.2 mol%, and the content of 1,2-structure was 0.6 mol%.

according to the DSC test data, for the butadiene rubber, Tg = -109.5°C; according to the GPC test data, the number average molecular weight of the copolymer was 129,000 g/mol, and the molecular weight distribution was 2.68.

Comparative Example 2

The butadiene rubber prepared in Comparative Example 1 was blended with the polyethylene solution to prepare 124.6g of blend having a polyethylene content of 8.2% (compared with Example 4).

According to the DSC test data, for the blend, Tg = -108.1°C, Tm = 138.7°C, Tc = 121.5°C, and the crystallinity was 5.5%.

Comparative Example 3

The butadiene rubber prepared in Comparative Example 1 was blended with the polyethylene solution to prepare 100.6g of blend having a polyethylene content of 12.9% (compared with Example 6).

According to the DSC test data, for the blend, Tg = -107.5°C, Tm = 140.7°C, Tc = 121.7°C, and the crystallinity was 9.0%.

Comparative Example 4

The butadiene rubber prepared in Comparative Example 1 was blended with the polyethylene solution to prepare 85.6g of blend having a polyethylene content of 4.9% (compared with Example 7).

According to the DSC test data, for the blend, Tg = -107.0°C, Tm = 139.2°C, Tc = 121.0°C, and the crystallinity was 2.9%.

Comparative Example 5

(1) The polymerization reaction equipment was circulated by using a double-row pipe operation technology three times, 2L of toluene and a catalyst represented by formula 1 were added (wherein $R_1$ was 2,6-$CH(CH_3)_2$- (the substituents at other substitution sites of a benzene ring were H atoms), $R_2$ was H (all substituents at substitution sites of a pyridine ring were H atoms), $R_7$ was methyl, and X was chlorine) (2.260 mmol), the materials were rapidly stirred with a mechanical stirrer to uniformly disperse a mixed system; the uniformly dispersed mixed system was heated to 45°C, diisobutylaluminum chloride (0.679 mol) and methylaluminoxane (MAO) (0.679 mol) were injected, 5.56 mol of 1,3-butadiene was added, ethylene monomers were introduced, a constant pressure (10 bar) was maintained, the copolymerization temperature was 40°C, after polymerization was performed for 10min, the introducing of ethylene monomer was stopped, the reaction time was 3h; wherein the molar ratio of the catalyst: aluminum-containing cocatalyst-1: the aluminum chloride-containing cocatalyst-2 was 1: 300: 300. The molar ratio of the catalyst: 1,3-butadiene was 1: 2,460.
The post-treatment on the polymerization product was performed according to the method in Example 1, and 268.4g of copolymer was obtained.
(2) The resulting copolymers were characterized: FT-IR (KBr, $cm^{-1}$) (the spectrogram illustrated the characteristic peaks of butadiene rubber with wave numbers of 1,647 $cm^{-1}$ and 741 $cm^{-1}$ and a polyethylene segment with a wave number of 721 $cm^{-1}$); calculation results obtained from the nuclear magnetic hydrogen spectrum indicated that the content polyethylene structural units was 6.7 wt%, and the content of butadiene structural units was 93.3 wt%; in the butadiene structural unit, the content of cis-1,4-structure was 85.8 mol%, the content of trans-1,4-structure was 8.7 mol%, and the content of 1,2-structure was 5.5 mol%;
according to the DSC test data, for the copolymer, Tg = -106.7°C, the obvious crystal was not observed; according to the GPC test data, the number average molecular weight of the copolymer was 68,000 g/mol, and the molecular weight distribution was 3.22.

Comparative Example 6

(1) The polymerization reaction equipment was circulated by using a double-row pipe operation technology three times, 2L of toluene and a catalyst represented by formula 1 were added (wherein $R_1$ was 2,4,6-$CH_3$- (the substituents at other substitution sites of a benzene ring were H atoms), $R_2$ was H (all substituents at substitution sites of a pyridine ring were H atoms), $R_7$ was methyl, and X was bromine) (2.260 mmol), the materials were rapidly stirred with a mechanical stirrer to uniformly disperse a mixed system; the uniformly dispersed mixed system was heated to 70°C, 8.8 mol of 1,3-butadiene monomer was added, a constant pressure (3 bar) atmosphere was maintained, diisobutylaluminium chloride (1.584 mol) was injected to initiate polymerization of butadiene monomers, the reaction time was 4h; a toluene solution of 2,2-methylene-bis-(4-methyl-6-tert-butylphenol) with a mass concentration of 5% was subsequently added as a stabilizer, 20mL of a hydrochloride methanol solution having the mass concentration 4% of hydrochloric acid was added to the polymerization system to terminate the reaction, wherein the molar ratio of the catalyst: the aluminum chloride-containing cocatalyst-2 was 1: 701. The molar ratio of the catalyst: 1, 3-butadiene was 1: 3,894.
(2) The polymerization reaction equipment was circulated by using a double-row pipe operation technology three times, 2L of toluene and a catalyst represented by formula 1 were added (wherein $R_1$ was 2,6-$CH_2CH_3$- (the substituents at other substitution sites of a benzene ring were H atoms), $R_2$ was 4-$N(CH_3)_2$- (all substituents at substitution sites of a pyridine ring were H atoms), $R_7$ was phenyl, X was chlorine) (2.260 mmol), the materials were rapidly stirred with a mechanical stirrer to uniformly disperse a mixed system; the uniformly dispersed mixed system was heated to 33°C, the ethylene monomer was introduced and a constant pressure (5 bar) atmosphere was maintained, modified methylaluminoxane (MMAO) (1.584 mol) was then added to initiate polymerization of ethylene, the reaction time was 18min; a toluene solution of 2,2-methylene-bis-(4-methyl-6-tert-butylphenol) with a mass concentration of 5% was added as a stabilizer, 20mL of a hydrochloride methanol solution having the mass concentration 4% of hydrochloric acid was subsequently added to the polymerization system to terminate the reaction, the reaction was terminated synchronously with the reaction in step (1), wherein the molar ratio of the catalyst: the aluminum chloride-containing cocatalyst-1 was 1: 701.
(3) The solution obtained in step (1) and the solution obtained in step (2) were mixed uniformly by rapid stirring with a mechanical stirrer, the post-treatment on the polymerization product was performed according to the method in Example 11, and 474.4g of the blend was obtained, wherein he polyethylene segment content is 8.2 wt%, and the butadiene rubber segment content is 91.8 wt%; in the butadiene rubber segment, the content of cis-1, 4-structure is 98.2 mol%, the content of trans-1, 4-structure is 1.1 mol%, and the content of 1,2-structure is 0.7 mol%.

According to the DSC test data, for the blend, Tg = -109.5°C, Tm = 138.8°C, Tc = 121.3°C, and crystallinity of the copolymer was 5.7%.

Comparative Example 7

(1) The polymerization reaction equipment was circulated by using a double-row pipe operation technology three times, 2L of toluene, ethylene, and a catalyst represented by formula 1 were added (wherein $R_1$ was 2,6-$CH(CH_3)_2$- (the substituents at other substitution sites of a benzene ring were H atoms), $R_2$ was 4-$OCH_3$- (all substituents at substitution sites of a pyridine ring were H atoms), $R_7$ was methyl, and X was chlorine) (2.260 mmol), the materials

were rapidly stirred with a mechanical stirrer to uniformly disperse a mixed system; the uniformly dispersed mixed system was heated to 39°C, the ethylene monomer was maintained at a constant pressure (4.9 bar) atmosphere, methylaluminoxane (MAO) (1.36 mol) was then added to initiate polymerization of ethylene, after polymerization was performed for 55s, the introducing of ethylene monomer was stopped;

the 1,3-butadiene monomer was introduced into the polymerization equipment to purge unpolymerized ethylene monomer, 3.24mol of 1,3-butadiene was added after the ethylene monomer was removed completely, the atmosphere of constant pressure (2 bar) was kept, diisopropylaluminium chloride (0.679 mol) was injected to initiate the copolymerization reaction of butadiene, the copolymerization reaction temperature was 48°C, and the copolymerization time was 4h; wherein the molar ratio of the catalyst: aluminum-containing cocatalyst-1: the aluminum chloride-containing cocatalyst-2 was 1: 602: 300, the molar ratio of the catalyst: 1,3-butadiene was 1: 1,433.

The post-treatment on the polymerization product was performed according to the method in Example 1, and 166.7g of copolymer was obtained.

(2) The resulting copolymers were characterized: FT-IR (KBr, $cm^{-1}$) (a spectrogram was obtained, the characteristic peaks of butadiene rubber with wave numbers of 1,644 $cm^{-1}$ and 734 $cm^{-1}$ and a polyethylene segment with a wave number of 719 $cm^{-1}$); nuclear magnetic hydrogen spectrum (ppm) (in the obtained spectrogram, the peak of butadiene rubber with a chemical shift of 5.4 and the peak of ethylene segment with a chemical shift of 1.10 were presented); the polyethylene segment content was 1.8 wt%, and the butadiene rubber segment content was 98.2 wt%; in the butadiene rubber segment, the content of cis-1,4-structure was 98.0 mol%, the content of trans-1,4-structure was 1.2 mol%, and the content of 1,2-structure was 0.8 mol%;

according to the DSC test data, for the copolymer, Tg = -111.7°C, Tm = 108.5°C, Tc = 95.4°C, and crystallinity of the copolymer was 0.7%; the continuous methylene sequence length was within the range of 45-124; according to the GPC test data, the number average molecular weight of the copolymer was 142,000 g/mol, and the molecular weight distribution was 2.74.

Comparative Example 8

(1) The polymerization reaction equipment was circulated by using a double-row pipe operation technology three times, 2L of toluene, ethylene, and a catalyst represented by formula 1 were added (wherein $R_1$ was H (the substituents at other substitution sites of a benzene ring were H atoms), $R_2$ was H (all substituents at substitution sites of a pyridine ring were H atoms), $R_7$ was methyl, and X was chlorine) (2.260 mmol), the materials were rapidly stirred with a mechanical stirrer to uniformly disperse a mixed system; the uniformly dispersed mixed system was heated to 30°C, the ethylene monomer was maintained at a constant pressure (4 bar) atmosphere, methylaluminoxane (MAO) (0.679 mol) was then added to initiate polymerization of ethylene after polymerization was performed for 5min, the introducing of ethylene monomer was stopped;

the 1,3-butadiene monomer was introduced into the polymerization equipment to purge unpolymerized ethylene monomer, 5.56mol of 1,3-butadiene was added after the ethylene monomer was removed completely, the atmosphere of constant pressure (3 bar) was kept, diisopropylaluminium chloride (0.679 mol) was injected to initiate the copolymerization reaction of butadiene, the copolymerization reaction temperature was 45°C, and the copolymerization time was 2h; wherein the molar ratio of the catalyst: aluminum-containing cocatalyst-1: the aluminum chloride-containing cocatalyst-2 was 1: 300: 300, the molar ratio of the catalyst: 1,3-butadiene was 1: 2,460.

The post-treatment on the polymerization product was performed according to the method in Example 1, and 256.1g of copolymer was obtained.

(2) The resulting copolymers were characterized: FT-IR (KBr, $cm^{-1}$) (a spectrogram was obtained, the characteristic peaks of butadiene rubber with wave numbers of 1,647 $cm^{-1}$ and 741 $cm^{-1}$ and a polyethylene segment with a wave number of 722 $cm^{-1}$); according to the nuclear magnetic hydrogen spectrum, the content of ethylene structural unit was 0.2 wt%, and the content of butadiene structural unit was 99.8 wt%; in the butadiene structural unit, the content of cis-1,4-structure was 98.2 mol%, the content of trans-1,4-structure was 1.1 mol%, and the content of 1,2-structure was 0.7 mol%;

according to the DSC test data, for the copolymer, Tg = -110.9°C, the obvious crystal was not observed; according to the GPC test data, the number average molecular weight of the copolymer was 317,000 g/mol, and the molecular

weight distribution was 2.84.

The breaking strength of the vulcanized rubber obtained in Examples and Comparative Examples was measured with the following methods:
mixing and vulcanizing: the copolymers obtained in the Examples, and the butadiene rubber and blend provided by the Comparative Examples were respectively prepared into the vulcanized rubber samples through the following methods: the mixing process: all the ingredients of vulcanized rubber were mixed in a HaproRM-200A Torque Rheometer (manufactured by Harbin Hapro Electric Technology Co., Ltd.), and the mixed samples were passed through a two-roll mill and subjected to the mill run for 20 times, the rubber compound was finally obtained. The mixing conditions were shown in Table 1.

Preparation of the vulcanized rubber samples: the obtained rubber compound was subjected to standing still at room temperature for 24 hours, and then placed in a processing template, and the rubber compound was vulcanized in a model XLB-D350 ×350 flat vulcanization machine with the vulcanization temperature set to 150°C and vulcanize the rubber compound according to t90 as vulcanization time.

Table 1 Mixing Conditions

| Addition time (min) | Additives and fillers (parts by weight) |
|---|---|
| 0-1 | Copolymer, 100 份 |
| 1-2 | ZnO, 4 parts; Stearic, 1.5 parts |
| 2-3 | 4010NA, 1 part |
| 3-6 | N330, 40 parts |
| 6-7 | CZ, 1.0 part; D, 0.5 part |
| 7-13 | Mixing |
| 13-14 | S, 1.5 份 |
| 14-15 | End |

Each of the prepared vulcanized rubber samples was measured according to the China National Standard GB/T528-1998 to obtain the breaking strength of vulcanized rubber, and tested according to the China National Standard GB/T529-1999 to obtain the tearing strength of vulcanized rubber, the results were shown in Table 2.

Table 2

| Items | | Example 1 | Example 2 | Example 3 | Example 4 | Example 5 |
|---|---|---|---|---|---|---|
| Polyethylene segment content, wt% | | 3.5 | 1.3 | 1.7 | 8.2 | 5.7 |
| MSL | | 261-412 | 165-264 | 182-302 | 243-394 | 271-446 |
| Cis-1,4-structure content, mol% | | 97.7 | 98.0 | 97.8 | 96.5 | 97.2 |
| Trans-1,4-structure content, mol% | | 1.4 | 1.2 | 1.3 | 2.2 | 1.7 |
| 1,2-structure content, mol% | | 0.9 | 0.8 | 0.9 | 1.3 | 1.1 |
| $Tg^1$, °C | | -109.9 | -111.7 | -107.9 | -113.9 | -106.9 |
| $Tm^2$, °C | | 133.4 | 127.3 | 129.4 | 132.8 | 134.2 |
| $Tc^3$, °C | | 118.3 | 109.6 | 111.5 | 114.1 | 115.9 |
| Crystallinity, % | | 2.5 | 0.9 | 1.2 | 6.1 | 4.2 |
| Mn, $\times 10^4$g/mol | | 17.4 | 33.6 | 41.1 | 67.7 | 14.2 |
| PDI | | 2.93 | 2.75 | 2.82 | 3.11 | 3.04 |
| Vulcanized rubber | Breaking Strength, MPa | 15.7 | 13.1 | 14.1 | 16.1 | 14.7 |
| | Tear strength, kN/m | 45.5 | 44.0 | 44.6 | 50.1 | 48.6 |

Table 2 (Continued)

| Items | | Example 6 | Example 7 | Example 8 | Example 9 | Example 10 |
|---|---|---|---|---|---|---|
| Polyethylene segment content, wt% | | 12.9 | 4.9 | 57.9 | 26.5 | 41.9 |
| MSL | | 361-592 | 247-408 | 539-860 | 417-672 | 475-780 |
| Cis-1,4-structure content, mol% | | 96.0 | 95.8 | 93.2 | 94.7 | 93.8 |
| Trans-1,4-structure content, mol% | | 2.6 | 2.7 | 4.2 | 3.2 | 3.8 |
| 1,2-structure content, mol% | | 1.4 | 1.5 | 2.6 | 2.1 | 2.4 |
| Tg[1], °C | | -110.1 | -108.5 | -110.9 | -106.4 | -102.5 |
| Tm[2], °C | | 136.7 | 133.2 | 139.2 | 137.7 | 138.6 |
| Tc[3], °C | | 115.2 | 112.5 | 118.8 | 117.2 | 116.9 |
| Crystallinity, % | | 9.7 | 3.6 | 46.3 | 20.2 | 32.7 |
| Mn, $\times 10^4$g/mol | | 20.8 | 35.0 | 33.3 | 31.4 | 13.9 |
| PDI | | 3.40 | 2.97 | 5.10 | 4.03 | 4.62 |
| Vulcanized rubber | Breaking Strength, MPa | 15.0 | 14.5 | 17.7 | 17.1 | 14.1 |
| | Tear strength, kN/m | 52.4 | 48.0 | 66.2 | 58.3 | 65.3 |

Table 2 (Continued)

| Items | | Example 11 | Example 12 | Example 13 | Example 14 | Example 15 |
|---|---|---|---|---|---|---|
| Polyethylene segment content, wt% | | 68.7 | 64.1 | 37.9 | 72.9 | 4.2 |
| MSL | | 278-456 | 645-1060 | 342-563 | 922-1800 | 170-278 |
| Cis-1,4-structure content, mol% | | 92.5 | 92.7 | 94.0 | 92.0 | 97.5 |
| Trans-1,4-structure content, mol% | | 4.7 | 4.6 | 3.7 | 5.1 | 1.5 |
| 1,2-structure content, mol% | | 2.8 | 2.7 | 2.3 | 2.9 | 1.0 |
| Tg[1], °C | | -110.6 | -102.4 | -109.9 | -101.7 | -111.7 |
| Tm[2], °C | | 134.4 | 140.2 | 136.3 | 142.1 | 128.1 |
| Tc[3] ,°C | | 115.1 | 117.8 | 115.9 | 120.9 | 108.9 |
| Crystallinity, % | | 56.0 | 51.9 | 29.6 | 59.8 | 3.0 |
| Mn, $\times 10^4$g/mol | | 18.3 | 25.8 | 32.0 | 30.3 | 58.6 |
| PDI | | 5.75 | 5.68 | 4.45 | 5.98 | 2.97 |
| Vulcanized rubber | Breaking Strength, MPa | 16.9 | 18.1 | 16.7 | 18.7 | 14.7 |
| | Tear strength, kN/m | 66.3 | 68.0 | 62.2 | 67.9 | 47.3 |

Table 2 (Continued)

| Items | Example 16 | Example 17 | Example 18 | Example 19 | Example 20 |
|---|---|---|---|---|---|
| Polyethylene content, wt% | 21.1 | 18.5 | 7.9 | 9.9 | 24.9 |
| MSL | 302-496 | 278-465 | 295-493 | 297-502 | 358-595 |
| Cis-1,4-structure content, mol% | 95.0 | 95.3 | 96.6 | 96.2 | 94.7 |
| Trans-1,4-structure content, mol% | 3.1 | 3.0 | 2.0 | 2.3 | 3.2 |
| 1,2-structure content, mol% | 1.9 | 1.7 | 1.4 | 1.5 | 2.1 |

(continued)

| Items | | Example 16 | Example 17 | Example 18 | Example 19 | Example 20 |
|---|---|---|---|---|---|---|
| $Tg^1$, °C | | -108.9 | -107.9 | -105.9 | -110.8 | -105.3 |
| $Tm^2$, °C | | 135.2 | 134.5 | 135.1 | 135.2 | 136.7 |
| $Tc^3$, °C | | 113.9 | 112.5 | 115.9 | 117.9 | 114.8 |
| Crystallinity, % | | 16.0 | 14.0 | 5.8 | 7.4 | 19.0 |
| Mn, $\times$ $10^4$g/mol | | 33.8 | 25.6 | 31.8 | 37.3 | 16.6 |
| PDI | | 3.83 | 3.76 | 3.08 | 3.28 | 3.91 |
| Vulcanized rubber | Breaking Strength, MPa | 16.2 | 14.1 | 13.9 | 15.3 | 16.0 |
| | Tear strength, kN/m | 56.7 | 54.4 | 49.3 | 50.6 | 57.5 |

Table 2 (Continued)

| Items | | Comparative Example 1 | Comparative Example 2 | Comparative Example 3 | Comparative Example 4 |
|---|---|---|---|---|---|
| Polyethylene content, wt% | | 0 | 8.2 | 12.9 | 4.9 |
| Cis-1,4-structure content, mol% | | 98.2 | 98.2 | 98.2 | 98.2 |
| Trans-1,4-structure content, mol% | | 1.2 | 1.2 | 1.2 | 1.2 |
| 1,2-structure content, mol% | | 0.6 | 0.6 | 0.6 | 0.6 |
| $Tg^1$, °C | | -109.5 | -108.1 | -107.5 | -107.0 |
| $Tm^2$, °C | | - | 138.7 | 140.7 | 139.2 |
| $Tc^3$, °C | | - | 121.5 | 121.7 | 121.0 |
| Crystallinity, % | | - | 5.5 | 9.0 | 2.9 |
| Mn, $\times$ $10^4$g/mol | | 12.9 | - | - | - |
| PDI | | 2.68 | - | - | - |
| Vulcanized rubber | Breaking Strength, MPa | 9.2 | 10.5 | 11.1 | 9.7 |
| | Tear strength, kN/m | 40.1 | 48.3 | 50.0 | 46.2 |

Table 2 (Continued)

| Items | Comparative Example 5 | Comparative Example 6 | Comparative Example 7 | Comparative Example 8 |
|---|---|---|---|---|
| Polyethylene content, wt% | 6.7[a] | 8.2 | 1.8 | 0.2[a] |
| MSL | - | - | 45-124 | - |
| Cis-1,4-structure content, mol% | 85.8 | 98.2 | 98.0 | 98.2 |
| Trans-1,4-structure content, mol% | 8.7 | 1.1 | 1.2 | 1.1 |
| 1,2-structure content, mol% | 5.5 | 0.7 | 0.8 | 0.7 |
| $Tg^1$,°C | -106.7 | -109.5 | -111.7 | -110.9 |
| $Tm^2$, °C | - | 138.8 | 108.5 | - |

(continued)

| Items | | Comparative Example 5 | Comparative Example 6 | Comparative Example 7 | Comparative Example 8 |
|---|---|---|---|---|---|
| Tc[3], °C | | - | 121.3 | 95.4 | - |
| Crystallinity, % | | - | 5.7 | 0.7 | - |
| Mn, × $10^4$g/mol | | 6.8 | - | 14.2 | 31.7 |
| PDI | | 3.22 | - | 2.74 | 2.84 |
| Vulcanized rubber | Breaking Strength, MPa | 10.9 | 11.8 | 11.2 | 9.5 |
| | Tear strength, kN/m | 38.1 | 48.7 | 42.2 | 40.4 |
| Note: [1]-glass transition temperature; [2]-melting temperature; [3]-crystallization temperature; [a]-ethylene structural unit content | | | | | |

As can be seen from the results of Table 2 and comparison with the Comparative Examples, the copolymers prepared in the Examples with the one-step polymerization method of the present invention have better reinforcing effect, the vulcanized rubber has higher breaking strength and tear strength. The melting temperature Tm tends to rise along with an increase in the polyethylene content, and the continuous polyethylene sequence length is improved accordingly along with an increase of Tm. Polymers with equivalent ethylene content have lower Tm than Comparative Examples 2-4 and Comparative Example 6; the crystallinity exhibits a rising tendency along with an increase of the polyethylene content, and both the breaking strength and the tear strength of the vulcanized rubber tend to rise along with an increase of the crystallinity; compared with the polymers in Comparative Examples 2-4 and Comparative Example 6, the crystallinity of the polymer with the same ethylene content is higher, both the breaking strength and the tear strength are even higher. Along with an increase of the polyethylene content, the content of cis-1, 4-structure in the polybutadiene segment in the copolymer is slightly reduced; the vulcanized rubber strength also exhibits an increasing tendency along with the increased polymer molecular weight. The molecular weight distribution tends to rise along with an increase in the polyethylene content. For Comparative Example 5, both the breaking strength and the tear strength of the vulcanized rubber are not high due to the low molecular weight of the obtained polymer and the reduced cis-1,4 content, and the ethylene segment lacks a crystal. The copolymer obtained in Comparative Example 7 has a short continuous methylene sequence length, and the mechanical strength of the vulcanized rubber is lower than that of Examples 2 and 3 having a low ethylene content. The catalyst adopted in Comparative Example 8 has a small steric hindrance, the obtained copolymer has a low ethylene content, and cannot form a polyethylene segment with a larger continuous ethylene sequence length, so the mechanical property of the vulcanized rubber is degraded.

FIG. 6 shows the Transmission Electron Microscopy (TEM) images of the copolymers prepared in Comparative Example 6 (left image) and Example 6 (right image); as can be seen from FIG. 6, the polyethylene phase and the polybutadiene phase in the copolymer obtained by the "in-situ polymerization" method are mixed more uniformly, and there is no significant aggregation of the polyethylene phase, compared with the solution blending or mechanical blending methods.

FIG. 7 illustrates a COSY spectrum of the copolymer prepared in Example 3, as can be seen from FIG. 7, the ethylene segment is directly chemically bonded to the butadiene segment, which indicates the formation of the ethylene-butadiene block copolymer, in combination with the continuous ethylene sequence length.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A copolymer, wherein the copolymer is a block copolymer and the copolymer comprises a polyethylene segment and a

butadiene rubber segment; based on the total weight of the copolymer, a weight ratio of the polyethylene chain segment to the butadiene rubber chain segment is within a range from 0.1:99.9 to 80:20; in the butadiene rubber chain segment, based on the total amount of the butadiene rubber chain segment, a content of the cis-1,4-structural unit is 90-98.5 mol%; a content of the trans-1,4-structural unit is 0.9-5.7mol%, and a content of the 1,2-structural unit is 0.6-4.3 mol%; a continuous methylene sequence length in the copolymer is at least 165.

**2.** The copolymer of claim 1, wherein the weight ratio of the polyethylene chain segment to the butadiene rubber chain segment is within the range from 1:99 to 75: 25;
preferably, the continuous methylene sequence length in the copolymer is within the range of 250-1,800.

**3.** The copolymer of claims 1 or 2, wherein a content of cis-1,4-structural unit in the butadiene rubber chain segment is within a range of 92-98 mol%, based on the total amount of the butadiene rubber chain segment.

**4.** The copolymer of any one of claims 1-3, wherein the copolymer has a melting temperature Tm within a range of 120-150°C and a crystallinity within a range of 0.2-80%; preferably, Tm is within a range of 125-145°C, and a crystallinity is within a range of 0.5-65%.

**5.** The copolymer of any one of claims 1-4, wherein the copolymer has a number average molecular weight within a range of 50,000-800,000 g/mol and a molecular weight distribution within a range of 2-7; preferably, the copolymer has a number average molecular weight within the range of 100,000-700,000 g/mol and a molecular weight distribution within the range of 2.5-6.5.

**6.** A method for preparing the copolymer comprising:

(1) subjecting ethylene to a polymerization reaction in the presence of an organic solvent, a catalyst, and an aluminum-containing cocatalyst-1 to obtain a polyethylene product; wherein the temperature of the polymerization reaction is within a range of 20-70°C, the ethylene pressure is kept at 1-70bar, and a time of the polymerization reaction is within a range of 1-80min;
(2) feeding 1,3-butadiene monomers into the polyethylene product and removing unreacted ethylene monomers;
(3) adding an aluminum chloride-containing cocatalyst-2 into the polymerization system obtained in step (2) to initiate a copolymerization reaction between the 1,3-butadiene monomers and a polyethylene active chain segment in the polyethylene product to prepare the copolymer; wherein the catalyst is at least one selected from the group consisting of compounds represented by formula 1, formula 2, and formula 3;

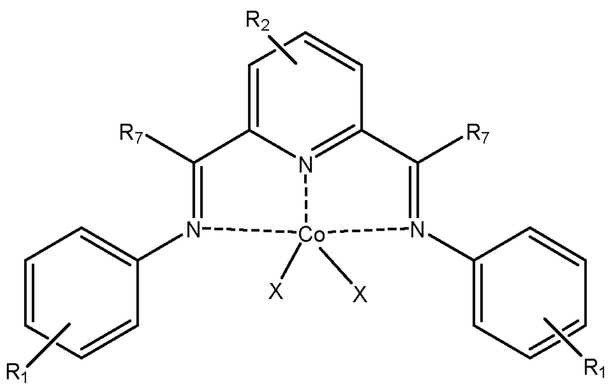

formula 1

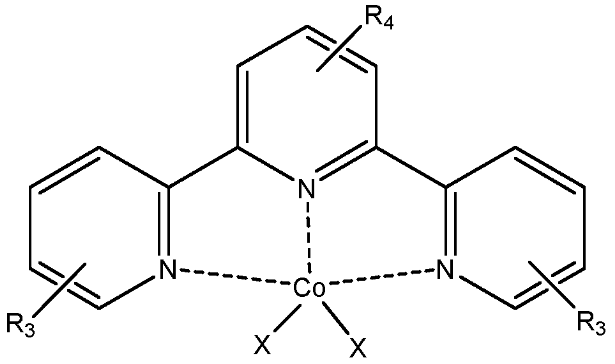

formula 2

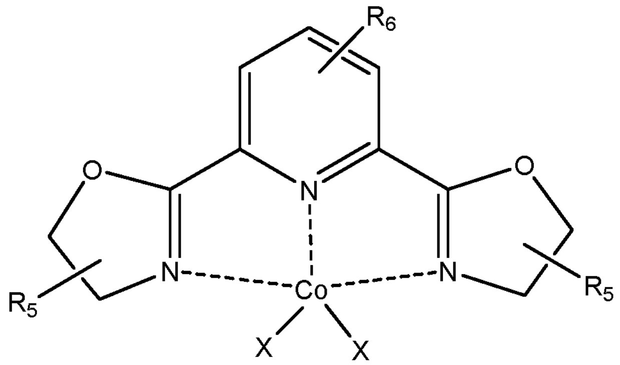

formula 3;

wherein X is chlorine or bromine;

$R_1$ is a substituent which is mono-substituted at the 2- or 4- site of the benzene ring, or the same or different substituents which are di-substituted at the 2-, 4- sites or 2-, 6- sites of the benzene ring, or the same or different substituents which are tri-substituted at the 2-, 4-, 6-sites of the benzene ring, wherein the substituent is -F, $-CH_3$, $-CH_2CH_3$, $-CH(CH_3)_2$, $-C(CH_3)_3$, $-C_6H_5$, or$-CH(C_6H_5)_2$;

$R_3$ is $-CH_3$, $-CH_2CH_3$, $-CH(CH_3)_2$, $-C(CH_3)_3$, $-C_6H_5$, or $-CH(C_6H_5)_2$ which is mono-substituted at the 6-site of the pyridine ring, or $-CH_3$, $-N(CH_3)_2$, or $-CF_3$ which is mono-substituted at the 4-site on the pyridine ring, or the same or different $-CH_3$, $-CH_2CH_3$, $-C_6H_5$, $-CH(C_6H_5)_2$, $-N(CH_3)_2$, or $-CF_3$ which are di-substituted at the 4- and 6- sites of the pyridine ring;

$R_5$ is $-CH_3$, $-CH_2CH_3$, $-CH(CH_3)_2$, $-C(CH_3)_3$, $-C_6H_5$, or $-CH(C_6H_5)_2$ which is mono-substituted at the 4-site of the dihydro oxazole ring;

$R_2$, $R_4$, and $R_6$ are each independently H, or -Cl, -F, $-CH_3$, $-OCH_3$, $-N(CH_3)_2$, or $-CF_3$ which are mono-substituted at the 4-site of the pyridine ring;

$R_7$ is H, $-CH_3$, $-CH_2CH_3$, $-CH(CH_3)_2$, $-C(CH_3)_3$, -Cl, $-C_6H_5$, or $-CH(C_6H_5)_2$.

**7.** The method of claim 6, wherein in step (1), a temperature of the polymerization reaction is within a range of 30-60°C, the ethylene pressure is kept at 2.5-50bar, and a time of the polymerization reaction is within a range of 2-60 min; preferably, the organic solvent is at least one selected from the group consisting of n-pentane, neopentane, n-hexane, cyclohexane, n-heptane, n-octane, isooctane, benzene, toluene, decalin, dodecane, and hydrogenated gasoline, more preferably toluene.

**8.** The method of claim 6 or 7, wherein the molar ratio of the catalyst: the aluminum-containing cocatalyst-1: the aluminum chloride-containing cocatalyst-2 is 1: (15-1,000): (20-1,000), preferably 1: (20-900): (40-900); preferably, the aluminum chloride-containing cocatalyst-2 is added in step (3).

**9.** The method of any one of claims 6-8, wherein the aluminium-containing cocatalyst-1 is at least one selected from the group consisting of methylaluminoxane, triisobutylaluminium-modified methylaluminoxane, diethylaluminium chloride, ethylaluminium sesquichloride, di-n-propylaluminium chloride, diisopropylaluminium chloride, di-n-butylaluminium chloride, diisobutylaluminium chloride, di-tert-butylaluminium chloride, di-n-octylaluminium chloride, ethylaluminium dichloride, n-propylaluminium dichloride, isopropylaluminium dichloride, n-butylaluminium dichloride, isobutylaluminium dichloride, and n-octylaluminium dichloride, preferably at least one selected from the group consisting

of methylaluminoxane, triisobutylaluminium-modified methylaluminoxane, diethylaluminium chloride, di-tert-butylaluminium chloride, ethylaluminium dichloride, and ethylaluminium sesquichloride.

**10.** The method of any one of claims 6-9, wherein the aluminum chloride-containing cocatalyst-2 is at least one selected from the group consisting of diethylaluminium chloride, ethylaluminium sesquichloride, di-n-propylaluminium chloride, diisopropylaluminium chloride, di-n-butylaluminium chloride, diisobutylaluminium chloride, di-n-octylaluminium chloride, ethylaluminium dichloride, n-propylaluminium dichloride, isopropylaluminium dichloride, n-butylaluminium dichloride, isobutylaluminium dichloride, and n-octylaluminium dichloride, preferably at least one selected from the group consisting of diethylaluminium chloride, ethylaluminium dichloride, and ethylaluminium sesquichloride.

**11.** The method of any one of claims 6-10, wherein in step (3), a concentration of 1,3-butadiene in the polymerization system obtained in step (2) is within a range of 0.4-12 mol/L, preferably within the range of 0.6-9 mol/L;

preferably, a molar ratio of the catalyst to the 1,3-butadiene is 1: (1,000-10,000); more preferably 1: (1,200-8,000); preferably, the temperature of the copolymerization reaction is within a range of 30-70°C, more preferably within the range of 40-60°C; the pressure of the copolymerization reaction is within a range of 1-10bar, more preferably within the range of 2-5 bar; the time of the copolymerization reaction is within a range of 0.5-5 hours, more preferably within the range of 1-4 hours.

**12.** A copolymer produced with the method of any one of claims 6-11.

**13.** A vulcanized rubber produced with the copolymer of any one of claims 1-5 and 12.

**14.** A method for using the vulcanized rubber of claim 13 in a tire, a shoe sole, a conveyor belt, a hose, or a sealing gasket.

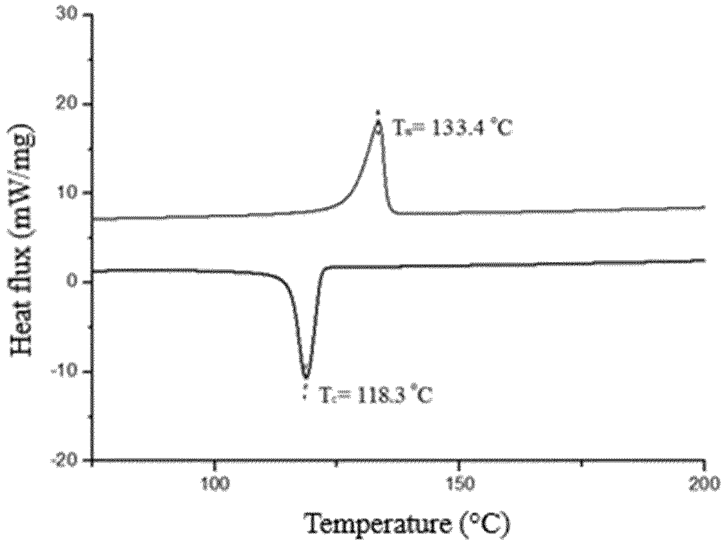
Heat flux (mW/mg)
Temperature (°C)
Tm= 133.4 °C
Tc= 118.3 °C
30
20
10
0
-10
-20
100
150
200

FIG. 1

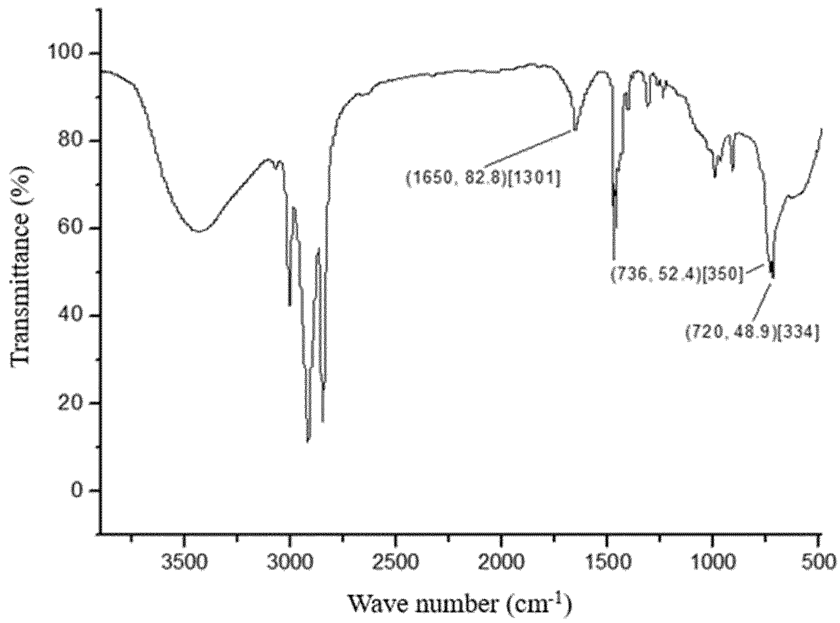
Transmittance (%)
Wave number (cm-1)
(1650, 82.8)[1301]
(736, 52.4)[350]
(720, 48.9)[334]
100
80
60
40
20
0
3500
3000
2500
2000
1500
1000
500

FIG. 2

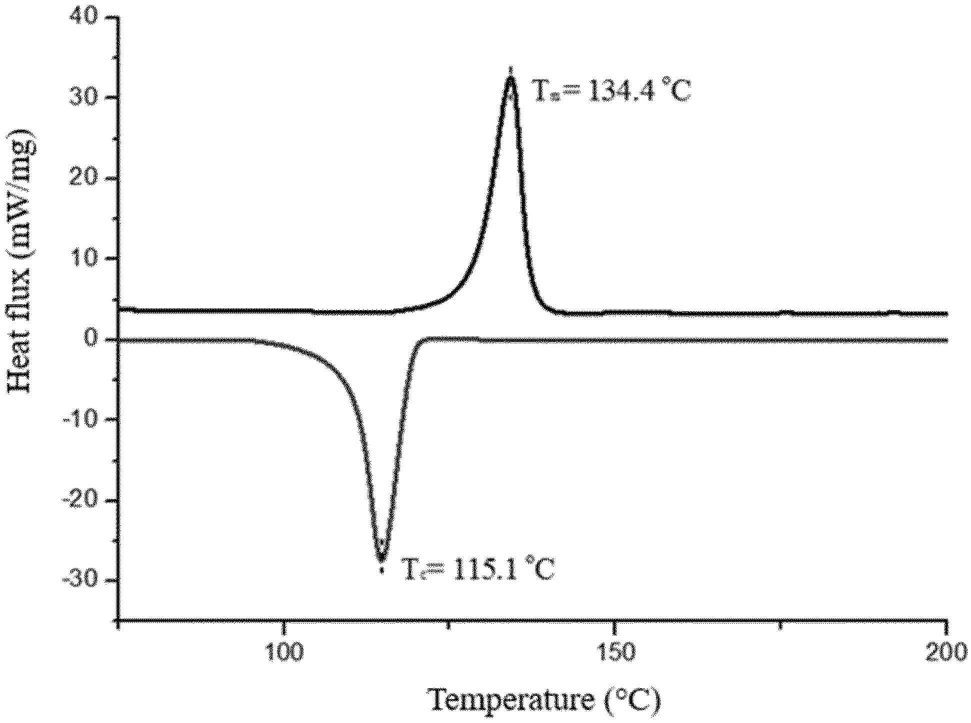

40
30
20
10
0
-10
-20
-30
Heat flux (mW/mg)
Tm= 134.4 °C
Tc= 115.1 °C
100
150
200
Temperature (°C)


FIG. 3

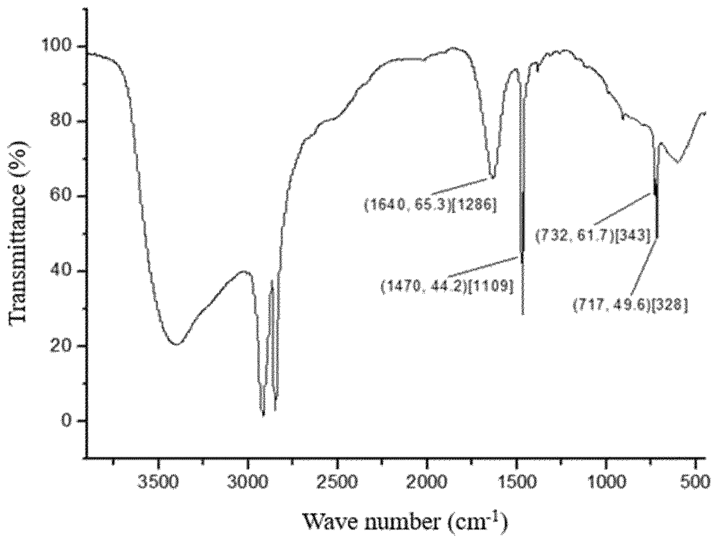

100
80
60
40
20
0
Transmittance (%)
(1640, 65.3)[1286]
(1470, 44.2)[1109]
(732, 61.7)[343]
(717, 49.6)[328]
3500
3000
2500
2000
1500
1000
500
Wave number (cm-1)


FIG. 4

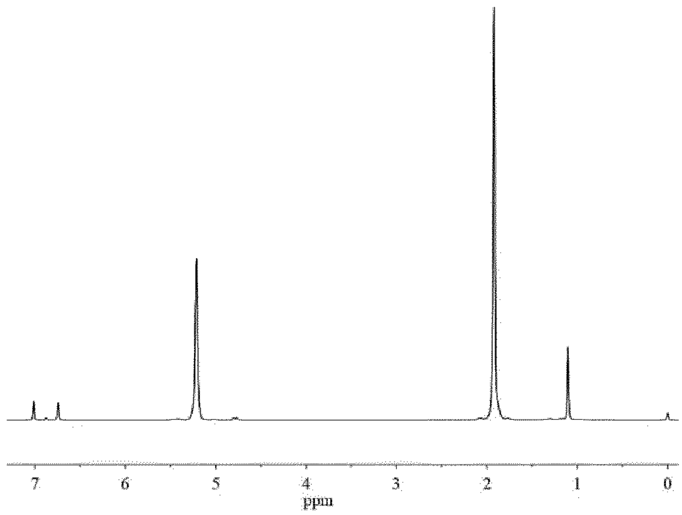


FIG. 5

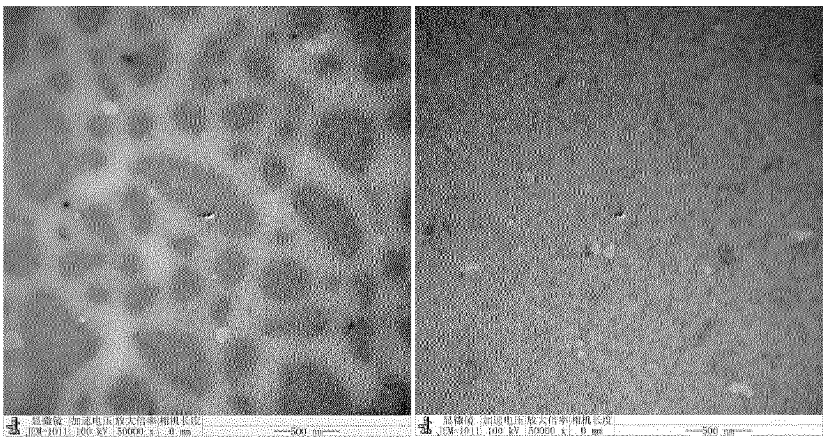


FIG. 6

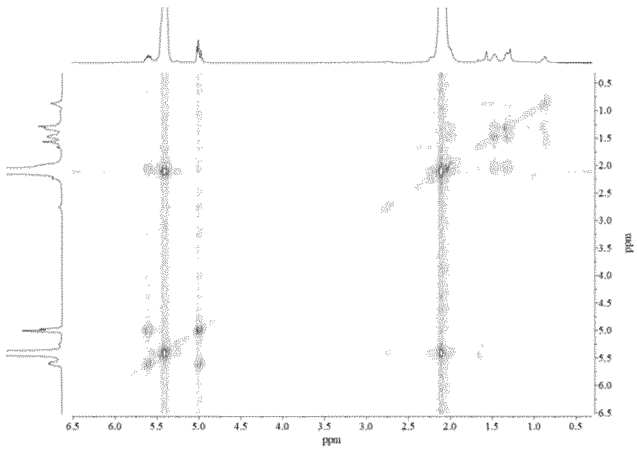


FIG. 7

**INTERNATIONAL SEARCH REPORT**

International application No.
**PCT/CN2023/126161**

**A. CLASSIFICATION OF SUBJECT MATTER**

C08F297/06(2006.01)i; C08F293/00(2006.01)i; C08F236/06(2006.01)i; C08F210/02(2006.01)i; C08F4/70(2006.01)i

According to International Patent Classification (IPC) or to both national classification and IPC

**B. FIELDS SEARCHED**

Minimum documentation searched (classification system followed by classification symbols)

IPC:C08F

Documentation searched other than minimum documentation to the extent that such documents are included in the fields searched

Electronic data base consulted during the international search (name of data base and, where practicable, search terms used)

CNTXT; ENTXT; DWPI; STN; CNKI; WEB OF SCIENCE: 聚乙烯, 丁二烯, 顺丁, 嵌段, 连续亚甲基序列长度, 催化剂, 钴, 铝, polyethylene, butadiene, cis, block, continuous methylene sequence length, MSL, catalysts, cobalt, aluminum

**C. DOCUMENTS CONSIDERED TO BE RELEVANT**

| Category* | Citation of document, with indication, where appropriate, of the relevant passages | Relevant to claim No. |
|---|---|---|
| X | CN 113480690 A (CHANGCHUN INSTITUTE OF APPLIED CHEMISTRY, CHINESE ACADEMY OF SCIENCES) 08 October 2021 (2021-10-08)<br>description, paragraphs 0007-0013, 0030, and 0069, and embodiment 7 | 1-5, 13-14 |
| A | CN 105669883 A (CHINA PETROLEUM & CHEMICAL CORP. et al.) 15 June 2016 (2016-06-15)<br>entire document | 6-12 |
| A | CN 103154061 A (BRIDGESTONE CORP.) 12 June 2013 (2013-06-12)<br>entire document | 1-14 |
| A | CN 108690167 A (CHANGCHUN INSTITUTE OF APPLIED CHEMISTRY, CHINESE ACADEMY OF SCIENCES) 23 October 2018 (2018-10-23)<br>entire document | 1-14 |
| A | JP 2015212332 A (BRIDGESTONE CORP.) 26 November 2015 (2015-11-26)<br>entire document | 1-14 |
| A | WO 2012014420 A1 (BRIDGESTONE CORP. et al.) 02 February 2012 (2012-02-02)<br>entire document | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 January 2024** | **12 January 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/126161**

**C. DOCUMENTS CONSIDERED TO BE RELEVANT**

| Category* | Citation of document, with indication, where appropriate, of the relevant passages | Relevant to claim No. |
|---|---|---|
| A | WO 2012164914 A1 (BRIDGESTONE CORP. et al.) 06 December 2012 (2012-12-06)<br>entire document | 1-14 |
| A | CN 112794964 A (TIANJIN UNIVERSITY) 14 May 2021 (2021-05-14)<br>entire document | 1-14 |

Form PCT/ISA/210 (second sheet) (July 2022)

**INTERNATIONAL SEARCH REPORT**
**Information on patent family members**

International application No.
**PCT/CN2023/126161**

| Patent document cited in search report | Publication date (day/month/year) | Patent family member(s) | Publication date (day/month/year) |
|---|---|---|---|
| CN 113480690 A | 08 October 2021 | CN 113480690 B | 05 May 2023 |
| CN 105669883 A | 15 June 2016 | CN 105669883 B | 05 June 2018 |
| CN 103154061 A | 12 June 2013 | EP 2599809 A1 | 05 June 2013 |
| | | EP 2599809 A4 | 12 March 2014 |
| | | EP 2599809 B1 | 23 September 2015 |
| | | WO 2012014457 A1 | 02 February 2012 |
| | | RU 2013108954 A | 10 September 2014 |
| | | RU 2537385 C2 | 10 January 2015 |
| | | US 2013211010 A1 | 15 August 2013 |
| | | US 9181376 B2 | 10 November 2015 |
| | | BR 112013002291 A2 | 24 May 2016 |
| | | BR 112013002291 B1 | 24 March 2020 |
| | | JPWO 2012014457 A1 | 12 September 2013 |
| | | JP 5775873 B2 | 09 September 2015 |
| | | CN 103154061 B | 17 December 2014 |
| CN 108690167 A | 23 October 2018 | US 2018291131 A1 | 11 October 2018 |
| | | US 10280243 B2 | 07 May 2019 |
| | | US 2019218328 A1 | 18 July 2019 |
| | | US 10683380 B2 | 16 June 2020 |
| | | CN 108690167 B | 23 July 2021 |
| JP 2015212332 A | 26 November 2015 | WO 2015166616 A1 | 05 November 2015 |
| | | JP 6334248 B2 | 30 May 2018 |
| | | EP 3138861 A1 | 08 March 2017 |
| | | EP 3138861 A4 | 12 April 2017 |
| | | EP 3138861 B1 | 03 April 2019 |
| | | US 2017101500 A1 | 13 April 2017 |
| | | US 10125210 B2 | 13 November 2018 |
| | | CN 106232654 A | 14 December 2016 |
| | | CN 106232654 B | 15 March 2019 |
| WO 2012014420 A1 | 02 February 2012 | US 2013211032 A1 | 15 August 2013 |
| | | US 8969496 B2 | 03 March 2015 |
| | | RU 2013108956 A | 10 September 2014 |
| | | RU 2542992 C2 | 27 February 2015 |
| | | BR 112013002290 A2 | 24 May 2016 |
| | | BR 112013002290 B1 | 04 February 2020 |
| | | JPWO 2012014420 A1 | 12 September 2013 |
| | | JP 5775872 B2 | 09 September 2015 |
| | | EP 2599808 A1 | 05 June 2013 |
| | | EP 2599808 A4 | 30 December 2015 |
| | | EP 2599808 B1 | 25 January 2017 |
| | | CN 103140521 A | 05 June 2013 |
| | | CN 103140521 B | 01 July 2015 |
| WO 2012164914 A1 | 06 December 2012 | US 2014179861 A1 | 26 June 2014 |
| | | US 9139680 B2 | 22 September 2015 |
| | | EP 2716670 A1 | 09 April 2014 |
| | | EP 2716670 A4 | 25 March 2015 |
| | | EP 2716670 B1 | 18 January 2017 |
| | | JPWO 2012164914 A1 | 23 February 2015 |
| | | JP 5739991 B2 | 24 June 2015 |

Form PCT/ISA/210 (patent family annex) (July 2022)

**INTERNATIONAL SEARCH REPORT**
**Information on patent family members**

International application No.
**PCT/CN2023/126161**

| Patent document cited in search report | | | Publication date (day/month/year) | Patent family member(s) | | | Publication date (day/month/year) |
|---|---|---|---|---|---|---|---|
| | | | | RU | 2553474 | C1 | 20 June 2015 |
| | | | | BR | 112013030818 | A2 | 06 December 2016 |
| | | | | CN | 103562246 | A | 05 February 2014 |
| | | | | CN | 103562246 | B | 15 July 2015 |
| | | | | IN | 201310124 | P1 | 02 January 2015 |
| | | | | IN | 314835 | B | 05 July 2019 |
| CN | 112794964 | A | 14 May 2021 | CN | 112794964 | B | 30 July 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211302115
- US 4340685 A
- CN 105814132 A
- US 9985115 B2
- US 6291591 B2
- US 6331594 B2
- GB 29611201 T
- GB 5282009 T
- GB 5292008 T
- GB 5281998 T
- GB 5291999 T


### Non-patent literature cited in the description


- Quantitative Determination of Short-Chain Branching Content and Distribution in polymeric polyesters by thermal Fractionated hybridization ranking calibration. Polymer Engineering & Science. 2003, 1878-1888
- **F. M. MIRABELLA**. *J. Polyrn Sci: Part B: Polym Phys.*, 2001 (39), 2800